# EUROPEAN PATENT APPLICATION

(11) **EP 4 815 462 A1**
(43) Date of publication of application: **30.09.2026**
(21) Application number: 24894373.0
(22) Date of filing: 11.10.2024
(51) Int. Cl.: H04N 19/82, H04N 19/70, G06N 3/08, G06N 3/045

(54) **IMAGE DECODING METHOD, IMAGE DECODING APPARATUS, IMAGE ENCODING METHOD AND IMAGE ENCODING APPARATUS**

(30) Priority: 23.11.2023 KR 20230164518
(71) Applicant: Samsung Electronics Co., Ltd., Suwon-si, Gyeonggi-do 16677 (KR)
(72) Inventor: DINH, Quockhanh, Suwon-si, Gyeonggi-do 16677 (KR); PARK, Minwoo, Suwon-si, Gyeonggi-do 16677 (KR); CHOI, Kwangpyo, Suwon-si, Gyeonggi-do 16677 (KR); PIAO, Yinji, Suwon-si, Gyeonggi-do 16677 (KR)
(74) Representative: Appleyard Lees IP LLP
(86) International application number: PCT/KR2024/015390
(87) International publication number: WO 2025/110477

(57) **Abstract**

Provided are an image decoding method and apparatus and an image encoding method and apparatus, which are for: acquiring a feature map for a plurality of pixels by inputting, into a neural network, a decoded image, a prediction image and coding context information for the current image including the plurality of pixels; mapping an index indicating a pixel correction value for at least one pixel from among the plurality of pixels on the basis of the feature map; identifying the pixel correction value on the basis of the index; acquiring a corrected pixel value for the at least one pixel on the basis of the identified pixel correction value; and acquiring, from the current image, an output image corrected so that the at least one pixel has the corrected pixel value.

## Description

### Technical Field

The present disclosure relates to encoding and decoding of an image. More particularly, the present disclosure relates to image encoding and image decoding that perform in-loop filtering by using artificial intelligence (AI), for example, a neural network.

### Background Art

In codecs such as H.264 advanced video coding (AVC), high efficiency video coding (HEVC), and versatile video coding (VVC), an image may be split into blocks and each block may be prediction-encoded and prediction-decoded through inter-prediction or intra-prediction.

Intra-prediction is a method of compressing an image by removing spatial redundancy in the image, and inter-prediction is a method of compressing an image by removing temporal redundancy between images.

In encoding and decoding processes, a current block is reconstructed by using a prediction block of the current block and a residual block of the current block. In-loop filtering is performed on the reconstructed current block to improve image quality of the reconstructed image.

Recently, with the development of hardware or artificial intelligence technology, technologies using a neural network have been proposed for performing in-loop filtering. The use of such a neural network has increased complexity in terms of calculation and increased required capacity in terms of memory.

Accordingly, there is a need for a method of reducing the amount of computation and reducing memory capacity while using a neural network.

### Disclosure of Invention

### Solution to Problem

An image decoding method according to an embodiment of the present disclosure may include obtaining a feature map for a plurality of pixels by inputting, to a neural network, a decoded image, a prediction image, and coding context information for a current image including the plurality of pixels, mapping an index indicating a pixel correction value for at least one pixel from among the plurality of pixels, based on the feature map, identifying the pixel correction value based on the index, obtaining a corrected pixel value for the at least one pixel based on the identified pixel correction value, and obtaining, from the current image, an output image in which the at least one pixel has been corrected to have the corrected pixel value.

An image decoding apparatus according to an embodiment of the present disclosure may include memory storing one or more instructions, and at least one processor configured to operate according to the one or more instructions. The at least one processor may be configured to obtain a feature map for a plurality of pixels by inputting, to a neural network, a decoded image, a prediction image, and coding context information for a current image including the plurality of pixels. The at least one processor may be configured to map an index indicating a pixel correction value for at least one pixel from among the plurality of pixels, based on the feature map. The at least one processor may be configured to identify the pixel correction value based on the index. The at least one processor may be configured to obtain a corrected pixel value for the at least one pixel by using the identified pixel correction value. The at least one processor may be configured to obtain, from the current image, an output image in which the at least one pixel has been corrected to have the corrected pixel value.

An image decoding method according to an embodiment of the present disclosure may include obtaining a feature map for a plurality of pixels by inputting, to a neural network, a decoded image, a prediction image, and coding context information for a current image including the plurality of pixels, mapping a plurality of indices indicating a pixel correction value for at least one pixel from among the plurality of pixels, based on the feature map, identifying a plurality of pixel correction values based on the plurality of indices, obtaining a final pixel correction value for the at least one pixel by using the plurality of identified pixel correction values, obtaining a corrected pixel value for the at least one pixel by using the obtained final pixel correction value, and obtaining, from the current image, an output image in which the at least one pixel has been corrected to have the corrected pixel value.

An image decoding apparatus according to an embodiment of the present disclosure may include memory storing one or more instructions, and at least one processor configured to operate according to the one or more instructions. The at least one processor may be configured to obtain a feature map for a plurality of pixels by inputting, to a neural network, a decoded image, a prediction image, and coding context information for a current image including the plurality of pixels. The at least one processor may be configured to map a plurality of indices indicating a pixel correction value for at least one pixel from among the plurality of pixels, based on the feature map. The at least one processor may be configured to identify a plurality of pixel correction values based on the plurality of indices. The at least one processor may be configured to obtain a final pixel correction value for the at least one pixel by using the plurality of identified pixel correction values. The at least one processor may be configured to obtain a corrected pixel value for the at least one pixel by using the obtained final pixel correction value. The at least one processor may be configured to obtain, from the current image, an output image in which the at least one pixel has been corrected to have the corrected pixel value.

An image encoding method according to an embodiment of the present disclosure may include obtaining a feature map for a plurality of pixels by inputting, to a neural network, a decoded image, a prediction image, and coding context information for a current image including the plurality of pixels, mapping an index indicating a pixel correction value for at least one pixel from among the plurality of pixels, based on the feature map, identifying the pixel correction value based on the index, obtaining a corrected pixel value for the at least one pixel based on the identified pixel correction value, and obtaining, from the current image, an output image in which the at least one pixel has been corrected to have the corrected pixel value.

An image encoding apparatus according to an embodiment of the present disclosure may include memory storing one or more instructions, and at least one processor configured to operate according to the one or more instructions. The at least one processor may be configured to obtain a feature map for a plurality of pixels by inputting, to a neural network, a decoded image, a prediction image, and coding context information for a current image including the plurality of pixels. The at least one processor may be configured to map an index indicating a pixel correction value for at least one pixel from among the plurality of pixels, based on the feature map. The at least one processor may be configured to identify the pixel correction value based on the index. The at least one processor may be configured to obtain a corrected pixel value for the at least one pixel by using the identified pixel correction value. The at least one processor may be configured to obtain, from the current image, an output image in which the at least one pixel has been corrected to have the corrected pixel value.

An image encoding method according to an embodiment of the present disclosure may include obtaining a feature map for a plurality of pixels by inputting, to a neural network, a decoded image, a prediction image, and coding context information for a current image including the plurality of pixels, mapping a plurality of indices indicating a pixel correction value for at least one pixel from among the plurality of pixels, based on the feature map, identifying a plurality of pixel correction values based on the plurality of indices, obtaining a final pixel correction value for the at least one pixel by using the plurality of identified pixel correction values, obtaining a corrected pixel value for the at least one pixel by using the obtained final pixel correction value, and obtaining, from the current image, an output image in which the at least one pixel has been corrected to have the corrected pixel value.

An image encoding apparatus according to an embodiment of the present disclosure may include memory storing one or more instructions, and at least one processor configured to operate according to the one or more instructions. The at least one processor may be configured to obtain a feature map for a plurality of pixels by inputting, to a neural network, a decoded image, a prediction image, and coding context information for a current image including the plurality of pixels. The at least one processor may be configured to map a plurality of indices indicating a pixel correction value for at least one pixel from among the plurality of pixels, based on the feature map. The at least one processor may be configured to identify a plurality of pixel correction values based on the plurality of indices. The at least one processor may be configured to obtain a final pixel correction value for the at least one pixel by using the plurality of identified pixel correction values. The at least one processor may be configured to obtain a corrected pixel value for the at least one pixel by using the obtained final pixel correction value. The at least one processor may be configured to obtain, from the current image, an output image in which the at least one pixel has been corrected to have the corrected pixel value.

### Brief Description of Drawings

FIG. 1 is a diagram illustrating image encoding and decoding processes.
FIG. 2 is a diagram illustrating blocks obtained by splitting an image according to a tree structure.
FIG. 3 illustrates a neural network-based pixel correction process according to an embodiment of the present disclosure.
FIG. 4 illustrates a process of determining a pixel correction value based on an index, according to an embodiment of the present disclosure.
FIG. 5 illustrates a process of determining a pixel correction value based on a plurality of indices and weights, according to an embodiment of the present disclosure.
FIG. 6 is a diagram for describing a process of determining a pixel correction value based on a plurality of indices and weights, according to an embodiment of the present disclosure.
FIG. 7 is a diagram for describing weight information according to an embodiment of the present disclosure.
FIG. 8 is a diagram for describing an image decoding method according to an embodiment of the present disclosure.
FIG. 9 is a diagram for describing an image decoding method according to an embodiment of the present disclosure.
FIG. 10 is a diagram illustrating a configuration of an image decoding apparatus according to an embodiment of the present disclosure.
FIG. 11 is a diagram for describing an image encoding method according to an embodiment of the present disclosure.
FIG. 12 is a diagram for describing an image encoding method according to an embodiment of the present disclosure.
FIG. 13 is a diagram illustrating a configuration of an image encoding apparatus according to an embodiment of the present disclosure.
FIG. 14 is a diagram for describing a method of training neural networks and a method of obtaining a data set, according to an embodiment of the present disclosure.
FIG. 15 is a diagram for describing a method of training neural networks and a method of obtaining data sets, according to an embodiment of the present disclosure.

### Mode for the Invention

In the present disclosure, the expression "at least one of a, b, or c" may indicate "a", "b", "c", "a and b", "a and c", "b and c", "all of a, b, and c", or variations thereof.

As the present disclosure allows for various changes and numerous examples, particular embodiments of the present disclosure will be illustrated in the drawings and described in detail in the written description. However, this is not intended to limit an embodiment of the present disclosure to particular modes of practice, and it will be understood that all changes, equivalents, and substitutes that do not depart from the spirit and technical scope of the present disclosure are encompassed in the embodiments of the present disclosure.

In the description of an embodiment, certain detailed explanations of related art are omitted when it is deemed that they may unnecessarily obscure the essence of the present disclosure. Also, numbers (for example, a first, a second, and the like) used in the description of the specification are merely identifier codes for distinguishing one element from another.

Also, in the present disclosure, it will be understood that when elements are "connected" or "coupled" to each other, the elements may be directly connected or coupled to each other, but may alternatively be connected or coupled to each other with an intervening element therebetween, unless specified otherwise.

In the present disclosure, regarding an element represented as a "-er (or)", "unit", or a "module", two or more elements may be combined into one element or one element may be divided into two or more elements according to subdivided functions. In addition, each element described hereinafter may additionally perform some or all of functions performed by another element, in addition to main functions of itself, and some of the main functions of each element may be performed entirely by another component.

A processor may include various processing circuitry and/or a plurality of processors. For example, the term "processor" used herein, including in the claims, may include at least one processor and thus may include various processing circuitry. In at least one processor, one or more processors may be configured to perform various functions described herein individually and/or collectively in a distributed manner. As used herein, a "processor", "at least one processor", or "one or more processors" may be configured to perform several functions. Such terms unlimitedly cover a situation where one processor may perform some functions and another processor (other processors) may perform some other functions, and a situation where a single processor may perform all the functions. Also, at least one processor may include a combination of processors configured to perform various functions in a distributed manner. At least one processor may be configured to execute program instructions to achieve or perform various functions.

In the present disclosure, an "image" or "picture" may denote a still image (or a frame), a moving image including a plurality of consecutive still images, or a video.

In the present disclosure, a "neural network" is a representative example of an artificial neural network model simulating neurons in the brain, and is not limited to an artificial neural network model using a specific algorithm. The neural network may also be referred to as a deep neural network.

In the present disclosure, a "parameter" is a value used in an operation process of each layer forming a neural network, and for example, may be used when an input value is applied to a certain operation expression. The parameter is a value set as a result of training, and may be updated through separate training data when necessary.

In the present disclosure, a "sample" is data assigned to a sampling location in 1-dimensional or 2-dimensional data, such as an image, a block, or feature data, and denotes data to be processed. For example, a sample may include a pixel in a 2-dimensional image. The 2-dimensional data may be referred to as a "map".

Also, in the present disclosure, a "current block" denotes a block to be currently processed. The current block may be a slice, a tile, a maximum coding unit, a coding unit, a prediction unit, or a transform unit, which is obtained by splitting a current image.

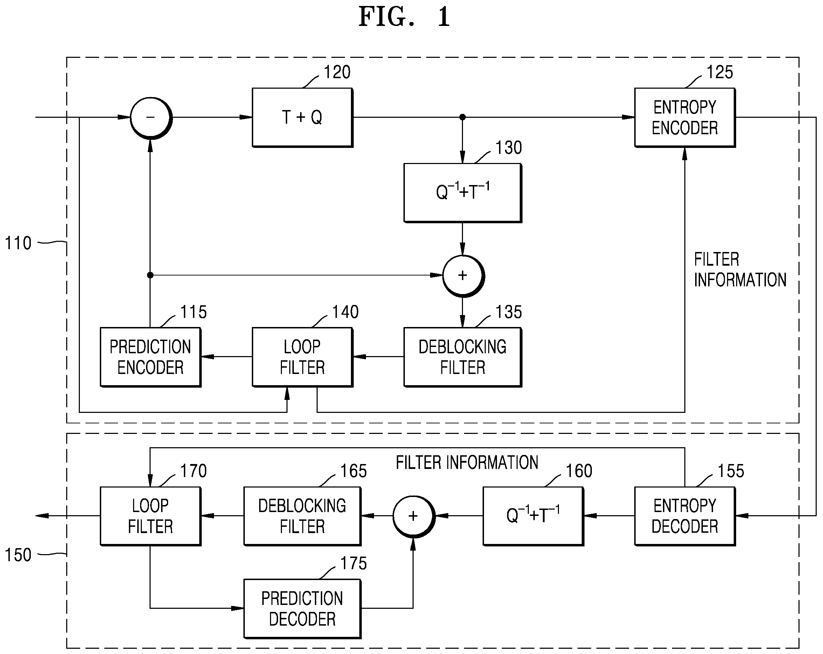

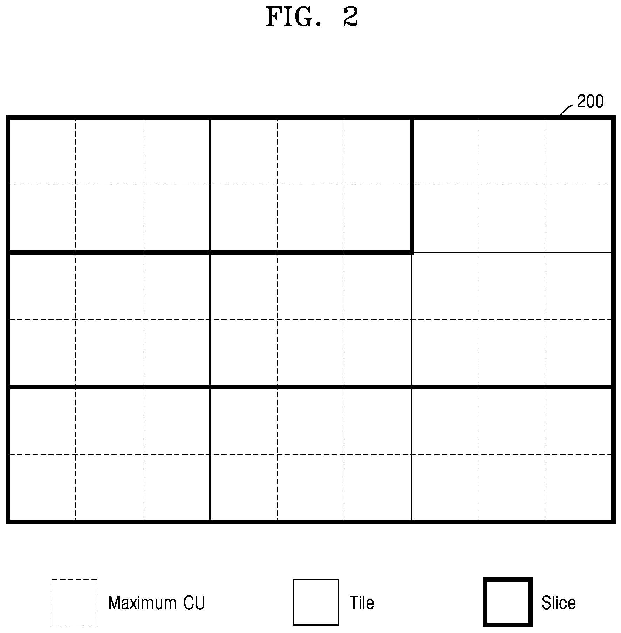

Before describing an image decoding method, an image decoding apparatus, an image encoding method, and an image encoding apparatus, according to an embodiment of the present disclosure, image encoding and decoding processes will be described with reference to FIGS. 1 and 2.

FIG. 1 is a diagram illustrating image encoding and decoding processes.

An encoding apparatus 110 transmits a bitstream generated by encoding an image to a decoding apparatus 150, and the decoding apparatus 150 receives and decodes the bitstream to reconstruct the image

In detail, in the encoding apparatus 110, a prediction encoder 115 outputs a prediction block through inter-prediction and intra-prediction, and a transformer and quantizer 120 transforms and quantizes residual samples of a residual block between the prediction block and a current block to output a quantized transform coefficient. An entropy encoder 125 encodes the quantized transform coefficient and outputs the same as the bitstream.

The quantized transform coefficient is reconstructed as the residual block including residual samples of a spatial domain through an inverse-quantizer and inverse-transformer 130. A reconstructed block in which the prediction block and the residual block are combined is output as a filtered block through the deblocking filter 135 and the loop filter 140. A reconstructed image including the filtered block may be used as a reference image of a next input image by the prediction encoder 115.

The bitstream received by the decoding apparatus 150 is reconstructed into the residual block including the residual samples of the spatial domain through an entropy decoder 155 and an inverse-quantizer and inverse-transformer 160. The residual block and the prediction block output from a prediction decoder 175 are combined to generate the reconstructed block, and the reconstructed block is output as the filtered block through a deblocking filter 165 and a loop filter 170. The reconstructed image including the filtered block may be used as a reference image for a next image in the prediction decoder 175.

The loop filter 140 of the encoding apparatus 110 performs loop filtering by using filter information input according to a user input or system setting. The filter information used by the loop filter 140 is transmitted to the decoding apparatus 150 through the entropy encoder 125. The loop filter 170 of the decoding apparatus 150 may perform loop filtering based on the filter information input from the entropy decoder 155.

In the image encoding and decoding processes, an image is hierarchically split, and encoding and decoding are performed on blocks obtained by splitting the image. The blocks obtained by splitting the image will be described with reference to FIG. 2.

FIG. 2 is a diagram illustrating blocks obtained by splitting an image according to a tree structure.

One image 200 may be split into one or more slices or one or more tiles. One slice may include a plurality of tiles.

One slice or one tile may be a sequence of one or more maximum coding units (CUs).

One maximum CU may be split into one or more CUs. A CU may be a reference block for determining a prediction mode. In other words, it may be determined whether an intra-prediction mode or the inter-prediction mode is applied to each CU. In the present disclosure, a maximum CU may be referred to as a maximum coding block, and a CU may be referred to as a coding block.

A size of a CU may be the same as a maximum CU or may be smaller than the maximum CU. A maximum CU is a CU having a maximum size, and thus may be referred to as a CU.

One or more prediction units for intra-prediction or inter-prediction may be determined from a CU. A size of a prediction unit may be the same as a CU or may be smaller than the CU.

Also, one or more transform units for transform and quantization may be determined from a CU. A size of a transform unit may be the same as a CU or may be smaller than the CU. A transform unit is a reference block for transform and quantization, and residual samples of a CU may be transformed and quantized for each transform unit in the CU.

In the present disclosure, a current block may be a slice, a tile, a maximum CU, a CU, a prediction unit, or a transform unit, which is obtained by splitting the image 200. Also, a lower block of a current block is a block obtained by splitting the current block, and for example, when the current block is a maximum CU, the lower block may be a CU, a prediction unit, or a transform unit. In addition, an upper block of a current block is a block including the current block as a portion, and for example, when the current block is the maximum CU, the upper block may be a picture sequence, a picture, a slice, or a tile.

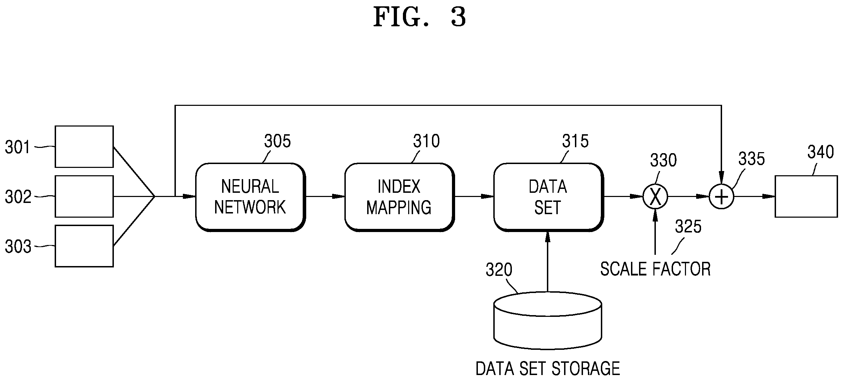

Hereinafter, a neural network-based pixel correction method used during an in-loop filtering process among the image encoding and decoding processes will be described with reference to FIGS. 3 to 13.

FIG. 3 illustrates a neural network-based pixel correction process according to an embodiment of the present disclosure.

Referring to FIG. 3, a current decoding image 301 of a current image, a current prediction image 302, and coding context information 303 of the current image are input to a neural network 305. The current decoding image 301, the current prediction image 302, and the coding context information 303 may be concatenated and input to a neural network. The neural network 305 may be a shallow neural network including one hidden layer, but is not limited thereto. In other words, the neural network 305 may include at least one hidden layer. A feature map for a plurality of pixels included in the current image is output from the neural network 305.

The coding context information may include a quantization parameter of a block included in the current image, a split tree structure of a block included in the current image, and a split type of a block included in the current image.

An index of one of the plurality of pixels is obtained by applying index mapping 310 to the feature maps. The index mapping 310 may include, for example, a non-linear mapping scheme such as clipping, quantization, or range mapping. The feature map is converted into the form of an index through the index mapping.

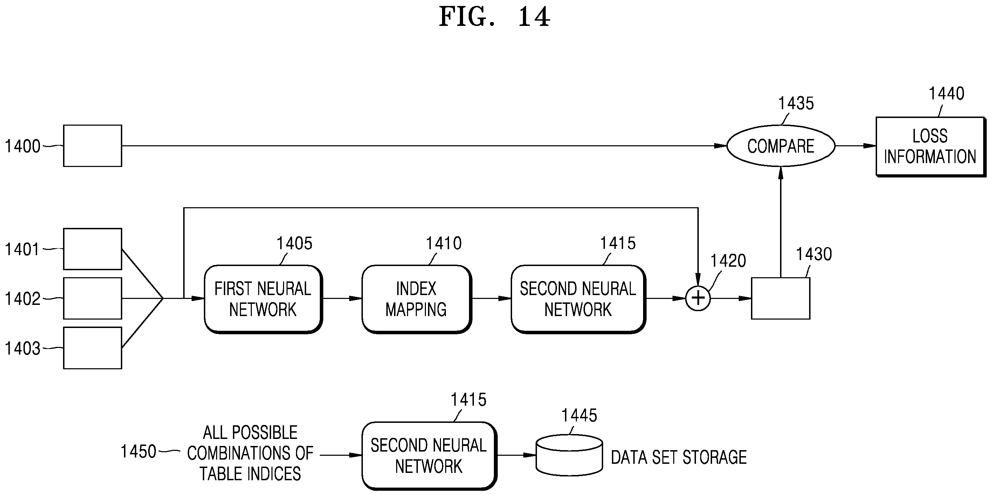

An index indicates one of pixel correction values included in at least one pre-determined data set 315 stored in a data set storage 320. The data set may be stored in the form of a lookup table. The data set is obtained by using a deep neural network used in a training process of the neural network 305. A method of training the neural network 305 will be described below with reference to FIG. 14.

A scale factor 325 indicating a degree to which the pixel correction value is to be reflected with respect to the pixel correction value indicated by the index is multiplied (330). The scale factor may be determined as a value between 0 and 1, but is not limited thereto. When the pixel correction value is reflected as it is, a value of the scale factor is 1, and when the pixel correction value is not reflected, the value of the scale factor is 0.

A corrected pixel value for the current image is obtained when the pixel correction value to which the scale factor has been applied is added (335) to a value of one of the plurality of pixels of the current decoding image. An output image 340 in which the current image has been corrected based on the corrected pixel value is obtained.

According to an embodiment of the present disclosure, compared to using a deep neural network including a plurality of layers, pixels may be corrected in units of pixels by using a shallow neural network including one hidden layer, thereby reducing memory and computation. In other words, the use of a deep neural network has a complicated structure, and thus, processing is performed in multi-scale, large memory is required, and calculation is complicated, whereas the use of a shallow neural network has a simple structure, and thus, processing is performed in single scale, small memory is required, and calculation is simple.

The use of a neural network that includes one layer is a hardware-friendly implementation. In detail, complexity is low because calculation of only one layer is required, memory is reduced by avoiding intermediate hidden layers (in particular, when a residual network or a dense network is used), and complete parallelization is possible because processing in units of pixels is possible.

In addition, a shallow neural network may not include only one layer, but may include at least one layer. In other words, the shallow neural network may include two or more layers. However, the shallow neural network may be a neural network having a simple structure compared to a deep neural network.

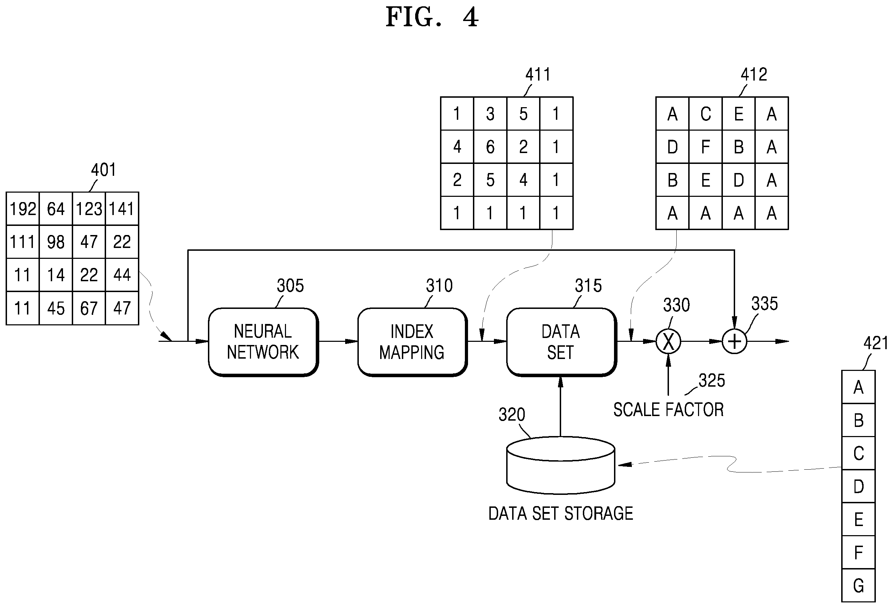

FIG. 4 illustrates a process of determining a pixel correction value based on an index, according to an embodiment of the present disclosure.

Referring to FIG. 4, a current decoding image 401 of a current image is a frame having a width of 4 and a height of 4, and includes 16 pixels. The current decoding image 401 is input to the neural network 305 together with a current prediction image and coding context information, and a feature map for the current image is output. Indices 411 for the respective 16 pixels included in the current decoding image 401 are obtained by applying the index mapping 310 to the feature map.

A data set 421 stored in the data set storage 320 in the form of a lookup table is obtained. In detail, when a value of an index is 1, a pixel correction value may be determined as A, which is a first value of the data set 421, when the value of the index 2, the pixel correction value may be determined as B, which is a second value of the data set 421, when the value of the index is 3, the pixel correction value may be determined as C, which is a third value of the data set 421, when the value of the index is 4, the pixel correction value may be determined as D, which is a fourth value of the data set 421, when the value of the index is 5, the pixel correction value may be determined as E, which is a fifth value of the data set 421, when the value of the index is 6, the pixel correction value may be determined as F, which is a sixth value of the data set 421, and when the value of the index is 7, the pixel correction value may be determined as G, which is a seventh value of the data set 421.

Pixel correction values 412 indicated by the indices of respective 16 pixels may be obtained based on the indices 411 obtained through the index mapping 310 and the data set 421 obtained from the data set storage 320.

Each of the pixel correction values 412 is multiplied by the scale factor 325 and then added to the plurality of pixels corresponding to the pixel correction values 412 of the current decoding image 401, respectively, thereby obtaining an output image in which the current image is corrected.

In FIG. 4, the data set 421 is described in the form of a lookup table in a one-dimensional arrangement, but is not limited thereto, and may be in the form of a lookup table in a multi-dimensional arrangement, for example, a two-dimensional, three-dimensional, four-dimensional, or five-dimensional arrangement. In this case, an index of the data set may also be represented as a multi-dimensional value rather than a one-dimensional value. For example, in the case of two-dimensions, the index may be represented as (i₁, i₂), and in the case of three-dimensions, the index may be expressed as (i₁, i₂, i₃).

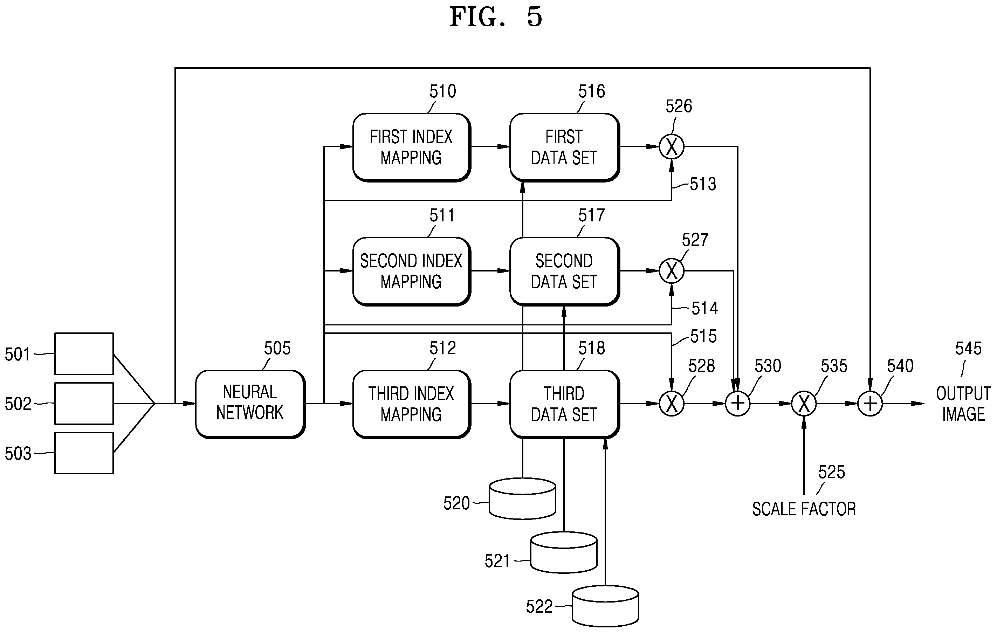

FIG. 5 illustrates a process of determining a pixel correction value based on a plurality of indices and weights, according to an embodiment of the present disclosure.

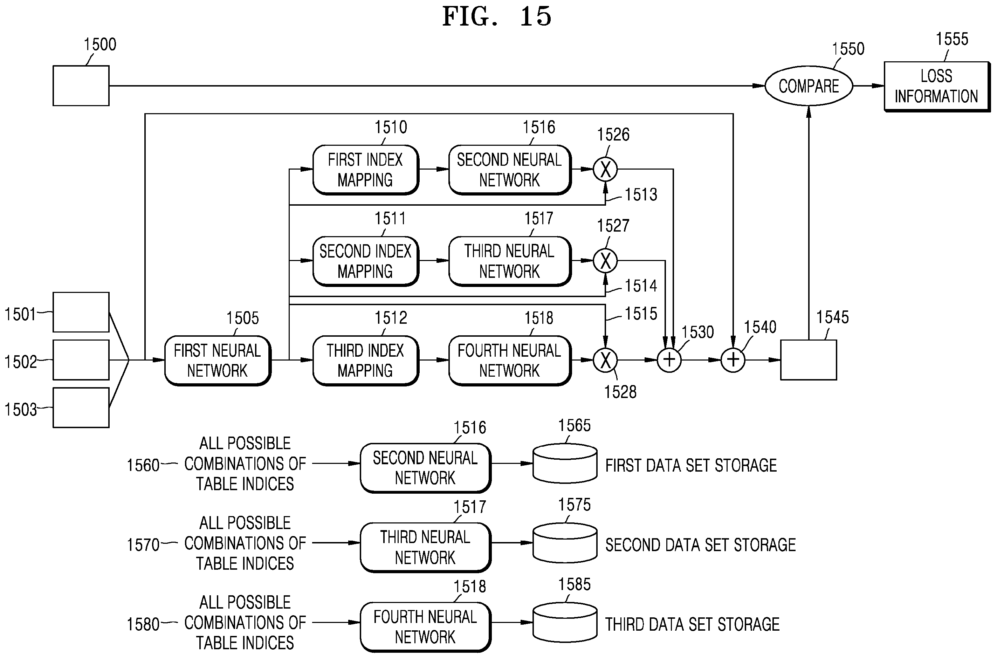

Referring to FIG. 5, a current decoding image 501, a current prediction image 502, and coding context information 503 for a current image are input to a neural network 505, and a feature map for the current image and a plurality of pieces of weight information 513, 514, and 515 are obtained. The neural network 505 may be a shallow neural network including one hidden layer. However, the present disclosure is not limited thereto. In other words, the neural network 505 may include at least one hidden layer. A method of training the neural network 505 will be described below with reference to FIG. 15.

The feature map for the current image is applied to each of index mapping schemes 510, 511, and 512. The feature map may have a size of H x W x C. H denotes a height, W denotes a width, and C denotes the number of channels.

In addition, the feature map for the current image may be divided as much as the number of index mapping schemes and applied to the index mapping schemes 510, 511, and 512, respectively. In addition, the feature map may be divided and applied to each of the index mapping schemes in an unequal manner. The feature maps may have sizes of H x W x C1, H x W x C2, and H x W x C3. H denotes a height, W denotes a width, C1 denotes the number of channels to which a first index mapping scheme 510 is applied, C2 denotes the number of channels to which a second index mapping scheme 511 is applied, and C3 denotes the number of channels to which a third index mapping scheme 512 is applied.

In other words, the feature maps for the current image may be feature maps for the respective three index mapping schemes 510, 511, and 512. Alternatively, the feature map for the current image may be divided into three equal parts and applied to the three index mapping schemes 510, 511, and 512, respectively.

The weight information 513, 514, and 515 may be weight information corresponding to the respective index mapping schemes 510, 511, and 512. In addition, the weight information 513, 514, and 515 may be weight information corresponding to the feature maps divided and input to the index mapping schemes 510, 511, and 512, respectively.

Because the weight information 513, 514, and 515 include weights for the plurality of pixels included in the current decoding image 501, respectively, the size of each of the weight information 513, 514, and 515 may be H x W x 1. H denotes a height and W denotes a width.

One index from among first indices obtained through the first index mapping 510 indicates one pixel correction value from among pixel correction values included in at least one pre-determined first data set 516 in a first data set storage 520. The first data set 516 may be stored in the form of a lookup table.

First weight information 513 corresponding to the first index mapping 510 is multiplied (526) by the pixel correction value indicated by the index.

One index from among second indices obtained through the second index mapping 511 indicates one pixel correction value from among pixel correction values included in at least one pre-determined second data set 517 in a second data set storage 521. The second data set 517 may be stored in the form of a lookup table.

Second weight information 514 corresponding to the second index mapping 511 is multiplied (527) by the pixel correction value indicated by the index.

One index from among third indices obtained through the third index mapping 512 indicates one pixel correction value from among pixel correction values included in at least one pre-determined third data set 518 in a third data set storage 522. The third data set 518 may be stored in the form of a lookup table.

Third weight information 515 corresponding to the third index mapping 512 is multiplied (528) by the pixel correction value indicated by the index.

The pixel correction values multiplied by the first weight information 513, the pixel correction values multiplied by the second weight information 514, and the pixel correction values multiplied by the third weight information 515 are added (530). Final pixel correction values are obtained by multiplying (535) a scale factor 525 by the added pixel correction values. The scale factor 525 indicates a degree to which a pixel correction value is to be reflected, and may be determined as a value between 0 and 1, but is not limited thereto. When the pixel correction value is reflected as it is, a value of the scale factor is 1, and when the pixel correction value is not reflected, the value of the scale factor is 0.

An output image 545 in which the current image has been corrected is obtained by adding (540) the final pixel correction values and pixel values of the current decoding image 501.

According to an embodiment of the present disclosure, a plurality of data sets may be used to generate a plurality of pixel correction value candidates, and a weight may be linearly applied to the plurality of pixel correction value candidates to generate one pixel correction value, so that pixel correction may be dynamically and adaptively applied to a pixel. By mixing a plurality of small data sets, memory is saved while achieving same coding efficiency as using a large data set.

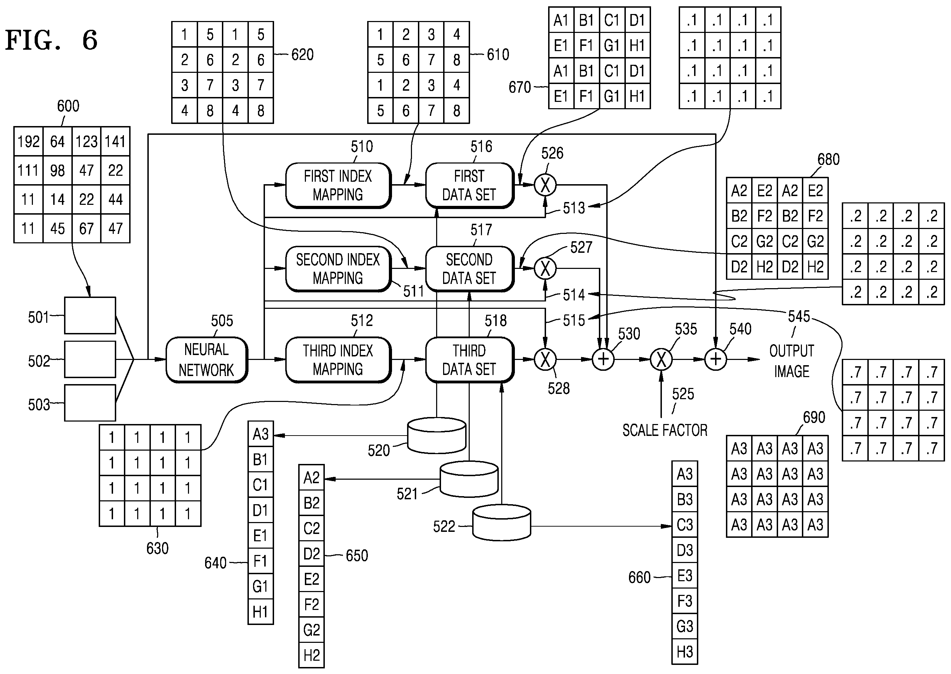

FIG. 6 is a diagram for describing a process of determining a pixel correction value based on a plurality of indices and weights, according to an embodiment of the present disclosure.

Referring to FIG. 6, the current decoding image 501 of the current image is a frame having a width of 4 and a height of 4, and includes 16 pixels 600. The current decoding image 501 is input to the neural network 505 together with the current prediction image and the coding context information, and the feature map for the current image and weight information about each index mapping scheme are output.

First indices 610 for the respective 16 pixels 600 included in the current decoding image 501 are obtained by applying the first index mapping 510 to the feature map.

The first data set 516 is obtained in the first data set storage 520. The first data set 516 is stored in the form of a lookup table 640. In detail, when a value of a first index is 1, a pixel correction value may be determined as A1, which is a first value of the lookup table 640, when the value of the first index is 2, the pixel correction value may be determined as B1, which is a second value of the lookup table 640, when the value of the first index is 3, the pixel correction value may be determined as C1, which is a third value of the lookup table 640, when the value of the first index is 4, the pixel correction value may be determined as D1, which is a fourth value of the lookup table 640, when the value of the first index is 5, the pixel correction value may be determined as E1, which is a fifth value of the lookup table 640, when the value of the first index is 6, the pixel correction value may be determined as F1, which is a sixth value of the lookup table 640, when the value of the first index is 7, the pixel correction value may be determined as G1, which is a seventh value of the lookup table 640, and when the value of the first index is 8, the pixel correction value may be determined as H1, which is an eighth value of the lookup table 640.

First pixel correction values 670 corresponding to the plurality of pixels 600 of the current decoding image 501 are obtained according to the first indices 610 and the lookup table 640.

In addition, second indices 620 for the respective 16 pixels 600 included in the current decoding image 501 are obtained by applying the second index mapping 511 to the feature map.

The second data set 517 is obtained in the second data set storage 521. The second data set 517 is stored in the form of a lookup table 650. In detail, when a value of a second index is 1, a pixel correction value may be determined as A2, which is a first value of the lookup table 650, when the value of the second index is 2, the pixel correction value may be determined as B2, which is a second value of the lookup table 650, when the value of the second index is 3, the pixel correction value may be determined as C2, which is a third value of the lookup table 650, when the value of the second index is 4, the pixel correction value may be determined as D2, which is a fourth value of the lookup table 650, when the value of the second index is 5, the pixel correction value may be determined as E2, which is a fifth value of the lookup table 650, when the value of the second index is 6, the pixel correction value may be determined as F2, which is a sixth value of the lookup table 650, when the value of the second index is 7, the pixel correction value may be determined as G2, which is a seventh value of the lookup table 650, and when the value of the second index is 8, the pixel correction value may be determined as H2, which is an eighth value of the lookup table 650.

Second pixel correction values 680 corresponding to the plurality of pixels 600 of the current decoding image 501 are obtained according to the second indices 620 and the lookup table 650.

In addition, third indices 630 for the respective 16 pixels 600 included in the current decoding image 501 are obtained by applying the third index mapping 512 to the feature map.

The third data set 518 is obtained in the third data set storage 522. The third data set 518 is stored in the form of a lookup table 660. In detail, when a value of a third index is 1, a pixel correction value may be determined as A3, which is a first value of the lookup table 660, when the value of the third index is 2, the pixel correction value may be determined as B3, which is a second value of the lookup table 660, when the value of the third index is 3, the pixel correction value may be determined as C3, which is a third value of the lookup table 660, when the value of the third index is 4, the pixel correction value may be determined as D3, which is a fourth value of the lookup table 660, when the value of the third index is 5, the pixel correction value may be determined as E3, which is a fifth value of the lookup table 660, when the value of the third index is 6, the pixel correction value may be determined as F3, which is a sixth value of the lookup table 660, when the value of the third index is 7, the pixel correction value may be determined as G3, which is a seventh value of the lookup table 660, and when the value of the third index is 8, the pixel correction value may be determined as H3, which is an eighth value of the lookup table 660.

Third pixel correction values 690 corresponding to the plurality of pixels 600 of the current decoding image 501 are obtained according to the third indices 630 and the lookup table 660.

The first pixel correction values 670 are multiplied (526) by the first weight information 513, the second pixel correction values 680 are multiplied (527) by the second weight information 514, and the third pixel correction values 690 are multiplied (528) by the third weight information 515, and then results thereof are all added (530).

The final pixel correction values are obtained by multiplying (535) the scale factor 525 by the added pixel correction values.

The output image 545 in which the current image has been corrected is obtained by adding (540) the final pixel correction values and the values of the pixels 600 of the current decoding image 501, respectively.

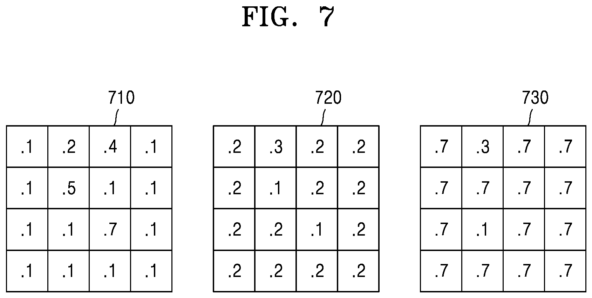

As shown in FIG. 6, the weights of the plurality of pixels of the current decoding image 501 in the first weight information 513 are all 0.1, the weights of the plurality of pixels of the current decoding image 501 in the second weight information 514 are all 0.2, and the weights of the plurality of pixels of the current decoding image 501 in the third weight information 515 are all 0.7, but the present disclosure is not limited thereto. An example of weight information will be described below with reference to FIG. 7.

FIG. 7 is a diagram for describing weight information according to an embodiment of the present disclosure.

Referring to FIG. 7, the first weight information 513 of FIG. 6 may include first weight values 710. In other words, the first weight information 513 may include various values instead of all of weight values being 0.1. Also, the second weight information 514 of FIG. 6 may include second weight values 720. In other words, the second weight information 514 may include various values instead of all of weight values being 0.2. Also, the third weight information 515 of FIG. 6 may include third weight values 730. In other words, the third weight information 515 may include various values instead of all of weight values being 0.7.

According to an embodiment of the present disclosure, the sum of the weight values respectively corresponding to pixels included in the weight information 513, 514, and 515 may be 1. However, the present disclosure is not limited thereto. In other words, the sum of the weight values respectively corresponding to the pixels included in the weight information 513, 514, and 515 may be less than 1 or greater than 1.

A method of correcting a pixel value, according to an embodiment of the present disclosure, described above with reference to FIGS. 3 to 7 may be used as an in-loop filter. For example, the method may be arranged in series between the in-loop filters. In detail, the method according to an embodiment of the present disclosure may be performed before deblocking filtering, may be performed after deblocking filtering, may be performed after sample adaptive offset (SAO) filtering, or may be performed after adaptive loop filtering (ALF).

In addition, the method according to an embodiment of the present disclosure may be performed before deblocking filtering, may be performed after deblocking filtering, may be performed after constrained directional enhanced filtering (CDEF) filtering, may be performed after cross-component sample offset (CCSO) filtering, or may be performed after loop restoration (LR) filtering.

In addition, the method of correcting a pixel value, according to an embodiment of the present disclosure, may be arranged in parallel with at least one in-loop filter from among in-loop filters. In detail, the method may be performed by being arranged in parallel with one of deblocking filtering, SAO filtering, and ALF filtering, being arranged in parallel with deblocking filtering and SAO filtering, being arranged in parallel with SAO filtering and ALF filtering, or being arranged in parallel with deblocking filtering, SAO filtering, and ALF filtering.

In addition, the method of correcting a pixel value, according to an embodiment of the present disclosure, may be arranged in parallel with at least one in-loop filter from among in-loop filters. In detail, the method may be performed by being arranged in parallel with one of deblocking filtering, CDEF filtering, CCSO filtering, and LR filtering, being arranged in parallel with deblocking filtering and CDEF filtering, being arranged in parallel with deblocking filtering, CDEF filtering, and CCSO filtering, being arranged in parallel with deblocking filtering, CDEF filtering, and CCSO filtering, and LR filtering, being arranged in parallel with CDEF filtering and CCSO filtering, being arranged in parallel with CDEF filtering, CCSO filtering, and LR filtering, or being arranged in parallel with CCSO filtering and LR filtering.

In addition, the method of correcting a pixel value, according to an embodiment of the present disclosure, may be used as an out-loop filter, that is, a post filter. For example, the method may be used as a reinforcing filter after decoding.

An output of a neural network used in the method of correcting a pixel value, according to an embodiment of the present disclosure, is used for an index for determining a pixel correction value or a pixel offset to improve the quality of video coding.

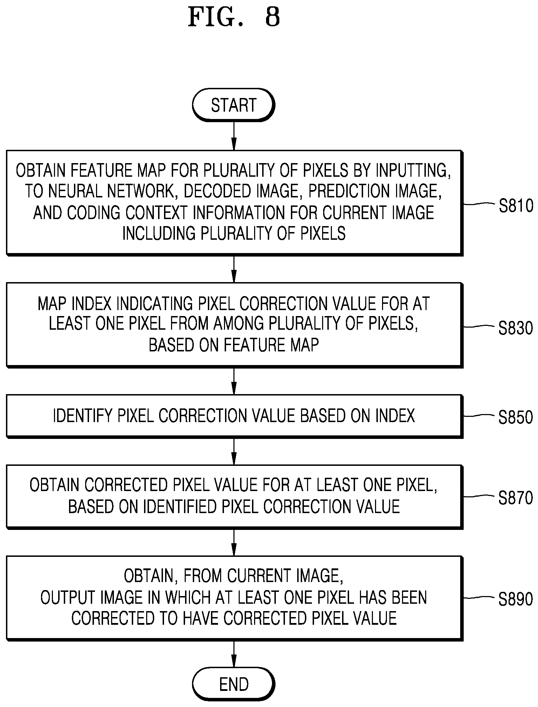

FIG. 8 is a diagram for describing an image decoding method according to an embodiment of the present disclosure.

In operation S810, an image decoding apparatus 1000 obtains a feature map for a plurality of pixels by inputting, to a neural network, a decoded image, a prediction image, and coding context information for a current image including the plurality of pixels.

According to an embodiment of the present disclosure, the neural network may include at least one hidden layer.

In operation S830, the image decoding apparatus 1000 maps an index indicating a pixel correction value for at least one pixel from among the plurality of pixels, based on the feature map.

According to an embodiment of the present disclosure, the index may indicate one of pixel correction values included in a pre-determined data set.

According to an embodiment of the present disclosure, the index may indicate one of pixel correction values included in one data set from among a plurality of pre-determined data sets.

According to an embodiment of the present disclosure, the pre-determined data set or the plurality of pre-determined data sets may be stored in the form of a lookup table.

In operation S850, the image decoding apparatus 1000 identifies the pixel correction value based on the index.

In operation S870, the image decoding apparatus 1000 obtains a corrected pixel value for the at least one pixel by using the identified pixel correction value.

According to an embodiment of the present disclosure, the image decoding apparatus 1000 may obtain a scale factor indicating a scale of pixel correction. The image decoding apparatus 1000 may multiply the pixel correction value by the scale factor. In other words, the degree to which the pixel correction value is applied may be corrected by the scale factor. The corrected pixel value for the at least one pixel may be determined based on the pixel correction value and the scale factor. The scale factor may be signaled after being determined according to rate-distortion optimization (RDO) during an encoding process. The scale factor may be determined based on information about the scale factor signaled during a decoding process.

In operation S890, the image decoding apparatus 1000 obtains, from the current image, an output image in which the at least one pixel has been corrected to have the corrected pixel value.

According to an embodiment of the present disclosure, the neural network may be trained by outputting a training feature map by using, as inputs, a training decoding image, a training prediction image, and training coding context information for a training current image, mapping a training index according to a pre-determined index mapping scheme by using the training feature map, obtaining a training pixel correction value by inputting the training index to a second neural network including a plurality of hidden layers, and obtaining a training output image based on the training pixel correction value.

According to an embodiment of the present disclosure, at least one data set including an index may be obtained by inputting all possible indices to the second neural network including the plurality of hidden layers.

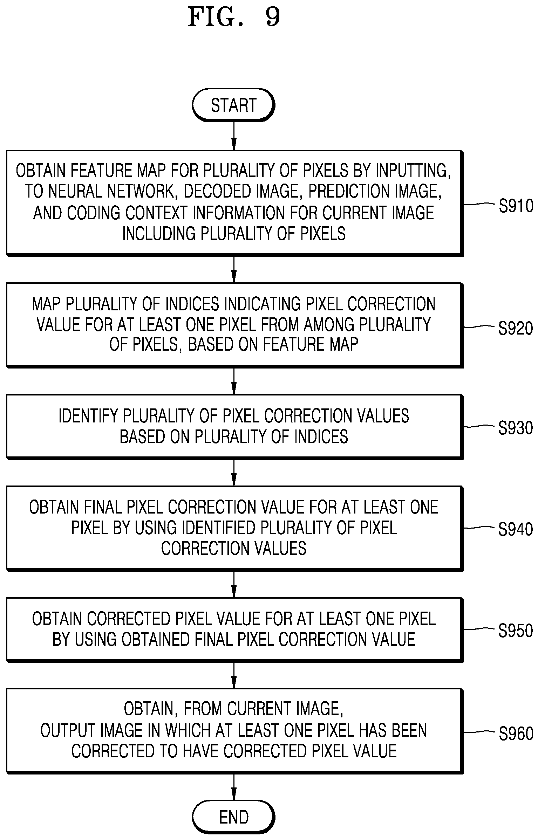

FIG. 9 is a diagram for describing an image decoding method according to an embodiment of the present disclosure.

In operation S910, the image decoding apparatus 1000 obtains a feature map for a plurality of pixels by inputting, to a neural network, a decoded image, a prediction image, and coding context information for a current image including the plurality of pixels.

According to an embodiment of the present disclosure, the neural network may include at least one hidden layer.

In operation S920, the image decoding apparatus 1000 maps a plurality of indices indicating a pixel correction value for at least one pixel from among the plurality of pixels, based on the feature map.

According to an embodiment of the present disclosure, one of the plurality of indices may indicate one of pixel correction values included in a pre-determined data set.

According to an embodiment of the present disclosure, one of the plurality of indices may indicate one of pixel correction values included in one data set from among a plurality of pre-determined data sets.

According to an embodiment of the present disclosure, the pre-determined data set or the plurality of pre-determined data sets may be stored in the form of a lookup table.

In operation S930, the image decoding apparatus 1000 identifies a plurality of pixel correction values based on the plurality of indices.

In operation S940, the image decoding apparatus 1000 obtains a final pixel correction value for the at least one pixel by using the plurality of identified pixel correction values.

According to an embodiment of the present disclosure, the image decoding apparatus 1000 may obtain a scale factor indicating a scale of pixel correction. The image decoding apparatus 1000 may multiply the final pixel correction value by the scale factor. In other words, the degree to which the final pixel correction value is applied may be corrected by the scale factor. A corrected pixel value for the at least one pixel may be determined based on the final pixel correction value and the scale factor. The scale factor may be signaled after being determined according to RDO during an encoding process. The scale factor may be determined based on information about the scale factor signaled during a decoding process.

According to an embodiment of the present disclosure, the final pixel correction value may be obtained by using a weighted sum of the plurality of pixel correction values.

According to an embodiment of the present disclosure, the final pixel correction value may be obtained by using a simple sum of the plurality of pixel correction values.

In operation S950, the image decoding apparatus 1000 may obtain a corrected pixel value of the at least one pixel by using the obtained final pixel correction value.

In operation S960, the image decoding apparatus 1000 obtains, from the current image, an output image in which the at least one pixel has been corrected to have the corrected pixel value.

According to an embodiment of the present disclosure, the neural network may be trained by outputting a training feature map by using, as inputs, a training decoding image, a training prediction image, and training coding context information for a training current image, mapping each of a plurality of training indices according to a plurality of pre-determined index mapping schemes by using the training feature map, obtaining a plurality of training pixel correction values by inputting the plurality of training indices respectively to a plurality of neural networks including a plurality of hidden layers, obtaining a training final pixel correction value by using the plurality of training pixel correction values, and obtaining a training output image based on the training final pixel correction value.

According to an embodiment of the present disclosure, at least one data set including each of a plurality of indices may be obtained by inputting all possible indices to each of a plurality of neural networks including a plurality of hidden layers.

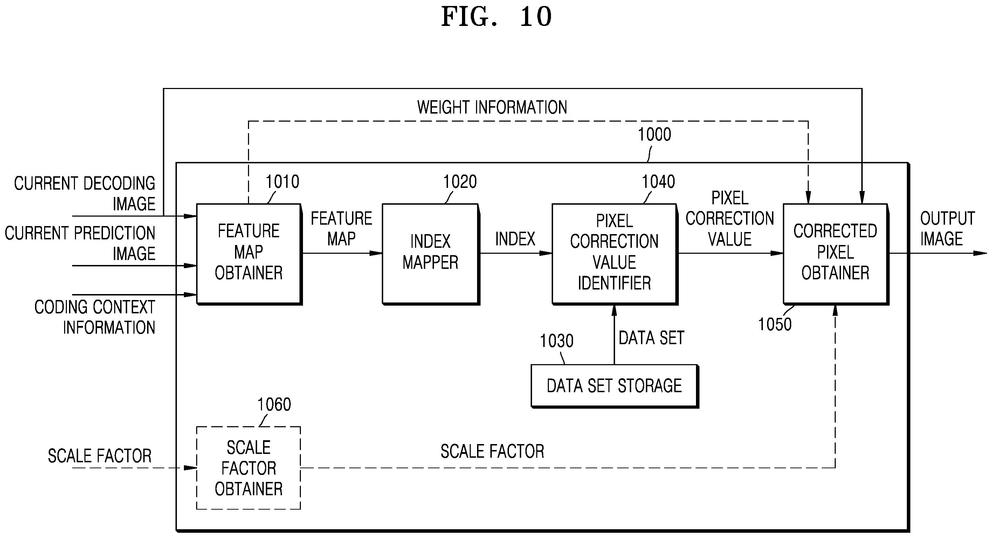

FIG. 10 is a diagram illustrating a configuration of an image decoding apparatus according to an embodiment of the present disclosure.

Referring to FIG. 10, the image decoding apparatus 1000 according to an embodiment of the present disclosure may include a feature map obtainer 1010, an index mapper 1020, a data set storage 1030, a pixel correction value identifier 1040, and a corrected pixel obtainer 1050. Also, the image decoding apparatus 1000 according to an embodiment of the present disclosure may further include a scale factor obtainer 1060.

The feature map obtainer 1010, the index mapper 1020, the data set storage 1030, the pixel correction value identifier 1040, the corrected pixel obtainer 1050, and the scale factor obtainer 1060 may be implemented as a processor. The feature map obtainer 1010, the index mapper 1020, the data set storage 1030, the pixel correction value identifier 1040, the corrected pixel obtainer 1050, and the scale factor obtainer 1060 may operate according to instructions stored in memory.

Although FIG. 10 individually illustrates the feature map obtainer 1010, the index mapper 1020, the data set storage 1030, the pixel correction value identifier 1040, the corrected pixel obtainer 1050, and the scale factor obtainer 1060, the feature map obtainer 1010, the index mapper 1020, the data set storage 1030, the pixel correction value identifier 1040, the corrected pixel obtainer 1050, and the scale factor obtainer 1060 may be implemented through one processor. In this case, the feature map obtainer 1010, the index mapper 1020, the data set storage 1030, the pixel correction value identifier 1040, the corrected pixel obtainer 1050, and the scale factor obtainer 1060 may be implemented as a dedicated processor or may be implemented through a combination of software and a general-purpose processor such as an application processor (AP), a central processing unit (CPU), or a graphics processing unit (GPU). In addition, the dedicated processor may include memory for implementing an embodiment of the present disclosure, or may include a memory processor for using external memory.

The feature map obtainer 1010, the index mapper 1020, the data set storage 1030, the pixel correction value identifier 1040, the corrected pixel obtainer 1050, and the scale factor obtainer 1060 may be implemented as a plurality of processors. In this case, the feature map obtainer 1010, the index mapper 1020, the data set storage 1030, the pixel correction value identifier 1040, the corrected pixel obtainer 1050, and the scale factor obtainer 1060 may be implemented as a combination of dedicated processors, or may be implemented through a combination of software and a plurality of general-purpose processors such as an AP, a CPU, or a GPU. In addition, the processor may include an artificial intelligence dedicated processor. In another example, the artificial intelligence dedicated processor may be configured as a chip separate from the processor.

The feature map obtainer 1010 may obtain a feature map for a plurality of pixels included in a current image by inputting, to a neural network, a current decoding image, a current prediction image, and coding context information for a current image.

The index mapper 1020 maps indices for respective plurality of pixels included in the current image, based on the feature map.

The data set storage 1030 transmits, to the pixel correction value identifier 1040, a data set including pixel correction values indicated by the indices mapped by the index mapper 1020.

The pixel correction value identifier 1040 identifies a pixel correction value based on the index mapped by the index mapper 1020 and the data set transmitted from the data set storage 1030.

The corrected pixel obtainer 1050 obtains an output image in which the current image has been corrected by using the pixel correction value identified by the pixel correction value identifier 1040 and a pixel value of the current decoding image.

According to an embodiment of the present disclosure, the scale factor obtainer 1060 may obtain a scale factor from a bitstream. The corrected pixel obtainer 1050 may obtain the output image in which the current image has been corrected by using the pixel correction value identified by the pixel correction value identifier 1040, the pixel value of the current decoding image, and the scale factor.

According to an embodiment of the present disclosure, when a plurality of index mapping schemes are applied, the feature map obtainer 1010 may additionally obtain weight information from the neural network. The index mapper 1020 may map a plurality of indices for a plurality of respective pixels included in the current image by applying the plurality of index mapping schemes, based on the feature map. The data set storage 1030 may transmit, to the pixel correction value identifier 1040, a plurality of data sets including pixel correction values indicated by the plurality of indices mapped by the index mapper 1020. The pixel correction value identifier 1040 may identify the pixel correction value based on the plurality of indices mapped by the index mapper 1020 and the plurality of data sets transmitted from the data set storage 1030. The corrected pixel obtainer 1050 may obtain the output image in which the current image has been corrected by using the pixel correction value identified by the pixel correction value identifier 1040, the pixel value of the current decoding image, and the weight information. Also, the scale factor obtainer 1060 may obtain the scale factor from the bitstream. The corrected pixel obtainer 1050 may obtain the output image in which the current image has been corrected by using the pixel correction value identified by the pixel correction value identifier 1040, the pixel value of the current decoding image, the weight information, and the scale factor.

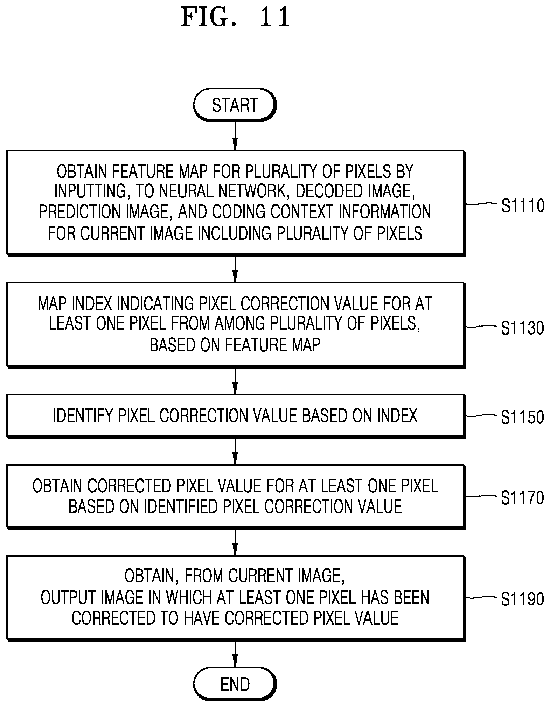

FIG. 11 is a diagram for describing an image encoding method according to an embodiment of the present disclosure.

In operation S1110, an image encoding apparatus 1300 obtains a feature map for a plurality of pixels by inputting, to a neural network, a decoded image, a prediction image, and coding context information for a current image including the plurality of pixels.

According to an embodiment of the present disclosure, the neural network may include at least one hidden layer.

In operation S1130, the image encoding apparatus 1300 maps an index indicating a pixel correction value for at least one pixel from among the plurality of pixels, based on the feature map.

According to an embodiment of the present disclosure, the index may indicate one of pixel correction values included in a pre-determined data set.

According to an embodiment of the present disclosure, the index may indicate one of pixel correction values included in one data set from among a plurality of pre-determined data sets.

According to an embodiment of the present disclosure, the pre-determined data set or the plurality of pre-determined data sets may be stored in the form of a lookup table.

In operation S1150, the image encoding apparatus 1300 identifies the pixel correction value based on the index.

In operation S1170, the image encoding apparatus 1300 obtains a corrected pixel value for the at least one pixel by using the identified pixel correction value.

According to an embodiment of the present disclosure, the image encoding apparatus 1300 may generate a scale factor indicating a scale of pixel correction. The image encoding apparatus 1300 may multiply the pixel correction value by the scale factor. In other words, the degree to which the pixel correction value is applied may be corrected by the scale factor. The corrected pixel value for the at least one pixel may be determined based on the pixel correction value and the scale factor. The scale factor may be signaled after being generated according to RDO during an encoding process.

In operation S1190, the image encoding apparatus 1300 obtains, from the current image, an output image in which the at least one pixel has been corrected to have the corrected pixel value.

According to an embodiment of the present disclosure, the neural network may be trained by outputting a training feature map by using, as inputs, a training decoding image, a training prediction image, and training coding context information for a training current image, mapping a training index according to a pre-determined index mapping scheme by using the training feature map, obtaining a training pixel correction value by inputting the training index to a second neural network including a plurality of hidden layers, and obtaining a training output image based on the training pixel correction value.

According to an embodiment of the present disclosure, at least one data set including an index may be obtained by inputting all possible indices to the second neural network including the plurality of hidden layers.

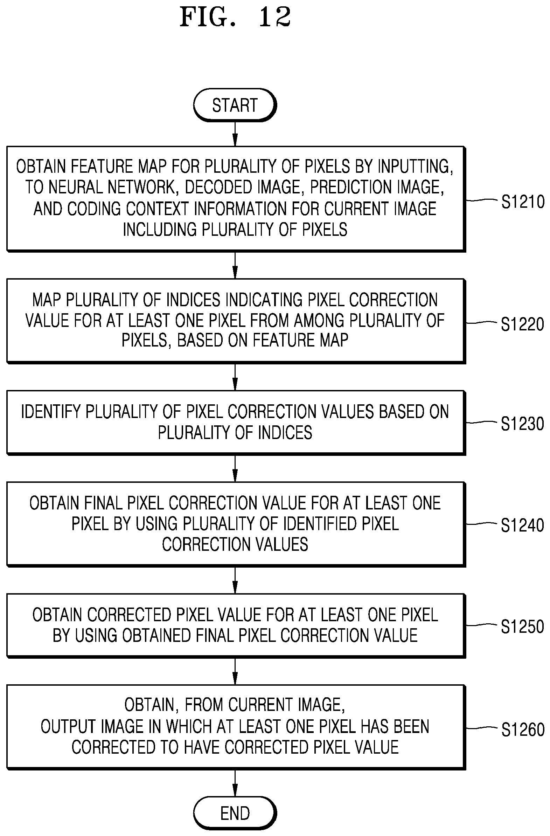

FIG. 12 is a diagram for describing an image encoding method according to an embodiment of the present disclosure.

In operation S1210, an image encoding apparatus 1300 obtains a feature map for a plurality of pixels by inputting, to a neural network, a decoded image, a prediction image, and coding context information for a current image including the plurality of pixels.

According to an embodiment of the present disclosure, the neural network may include at least one hidden layer.

In operation S1220, the image encoding apparatus 1300 maps a plurality of indices indicating a pixel correction value for at least one pixel from among the plurality of pixels, based on the feature map.

According to an embodiment of the present disclosure, one of the plurality of indices may indicate one of pixel correction values included in a pre-determined data set.

According to an embodiment of the present disclosure, one of the plurality of indices may indicate one of pixel correction values included in one data set from among a plurality of pre-determined data sets.

According to an embodiment of the present disclosure, the pre-determined data set or the plurality of pre-determined data sets may be stored in the form of a lookup table.

In operation S1230, the image encoding apparatus 1300 identifies a plurality of pixel correction values based on the plurality of indices.

In operation S1240, the image encoding apparatus 1300 obtains a final pixel correction value for the at least one pixel by using the plurality of identified pixel correction values.

According to an embodiment of the present disclosure, the image encoding apparatus 1300 may obtain a scale factor indicating a scale of pixel correction. The image encoding apparatus 1300 may multiply the final pixel correction value by the scale factor. In other words, the degree to which the final pixel correction value is applied may be corrected by the scale factor. A corrected pixel value for the at least one pixel may be determined based on the final pixel correction value and the scale factor. The scale factor may be signaled after being generated according to RDO during an encoding process.

According to an embodiment of the present disclosure, the final pixel correction value may be obtained by using a weighted sum of the plurality of pixel correction values.

According to an embodiment of the present disclosure, the final pixel correction value may be obtained by using a simple sum of the plurality of pixel correction values.

In operation S1250, the image encoding apparatus 1300 may obtain a corrected pixel value of the at least one pixel by using the obtained final pixel correction value.

In operation S1260, the image encoding apparatus 1300 obtains, from the current image, an output image in which the at least one pixel has been corrected to have the corrected pixel value.

According to an embodiment of the present disclosure, the neural network may be trained by outputting a training feature map by using, as inputs, a training decoding image, a training prediction image, and training coding context information for a training current image, mapping each of a plurality of training indices according to a plurality of pre-determined index mapping schemes by using the training feature map, obtaining a plurality of training pixel correction values by inputting the plurality of training indices respectively to a plurality of neural networks including a plurality of hidden layers, obtaining a training final pixel correction value by using the plurality of training pixel correction values, and obtaining a training output image based on the training final pixel correction value.

According to an embodiment of the present disclosure, at least one data set including each of a plurality of indices may be obtained by inputting all possible indices to each of a plurality of neural networks including a plurality of hidden layers.

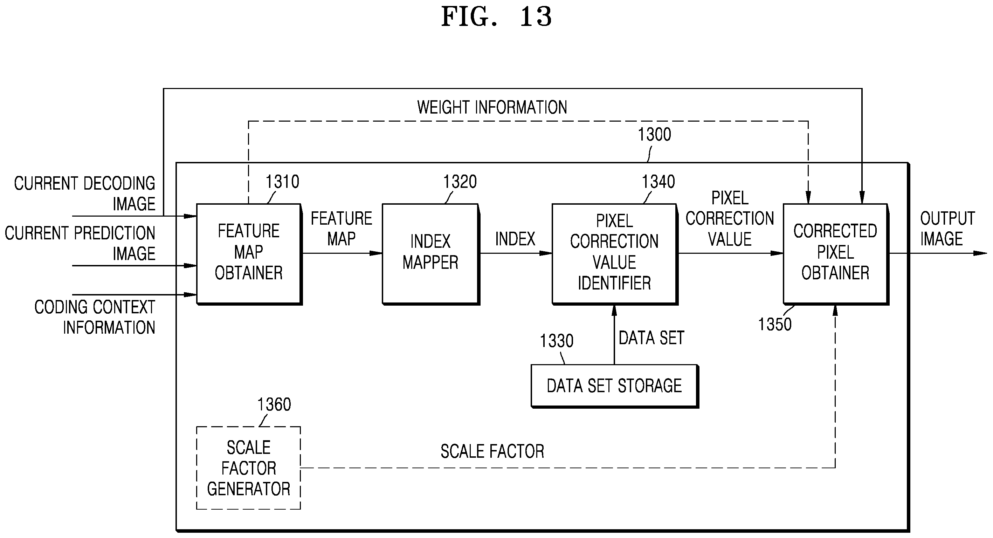

FIG. 13 is a diagram illustrating a configuration of an image encoding apparatus according to an embodiment of the present disclosure.

Referring to FIG. 13, the image encoding apparatus 1300 according to an embodiment of the present disclosure may include a feature map obtainer 1310, an index mapper 1320, a data set storage 1330, a pixel correction value identifier 1340, and a corrected pixel obtainer 1350. Also, the image encoding apparatus 1300 according to an embodiment of the present disclosure may further include a scale factor generator 1360.

The feature map obtainer 1310, the index mapper 1320, the data set storage 1330, the pixel correction value identifier 1340, the corrected pixel obtainer 1350, and the scale factor generator 1360 may be implemented as a processor. The feature map obtainer 1310, the index mapper 1320, the data set storage 1330, the pixel correction value identifier 1340, the corrected pixel obtainer 1350, and the scale factor generator 1360 may operate according to instructions stored in memory.

Although FIG. 13 individually illustrates the feature map obtainer 1310, the index mapper 1320, the data set storage 1330, the pixel correction value identifier 1340, the corrected pixel obtainer 1350, and the scale factor generator 1360, the feature map obtainer 1310, the index mapper 1320, the data set storage 1330, the pixel correction value identifier 1340, the corrected pixel obtainer 1350, and the scale factor generator 1360 may be implemented through one processor. In this case, the feature map obtainer 1310, the index mapper 1320, the data set storage 1330, the pixel correction value identifier 1340, the corrected pixel obtainer 1350, and the scale factor generator 1360 may be implemented as a dedicated processor or may be implemented through a combination of software and a general-purpose processor such as an AP, a CPU), or a GPU. In addition, the dedicated processor may include memory for implementing an embodiment of the present disclosure, or may include a memory processor for using external memory.

The feature map obtainer 1310, the index mapper 1320, the data set storage 1330, the pixel correction value identifier 1340, the corrected pixel obtainer 1350, and the scale factor generator 1360 may be implemented as a plurality of processors. In this case, the feature map obtainer 1310, the index mapper 1320, the data set storage 1330, the pixel correction value identifier 1340, the corrected pixel obtainer 1350, and the scale factor generator 1360 may be implemented as a combination of dedicated processors, or may be implemented through a combination of software and a plurality of general-purpose processors such as an AP, a CPU, or a GPU. In addition, the processor may include an artificial intelligence dedicated processor. In another example, the artificial intelligence dedicated processor may be configured as a chip separate from the processor.

The feature map obtainer 1310 may obtain a feature map for a plurality of pixels included in a current image by inputting, to a neural network, a current decoding image, a current prediction image, and coding context information for a current image.

The index mapper 1320 maps indices for respective plurality of pixels included in the current image, based on the feature map.

The data set storage 1330 transmits, to the pixel correction value identifier 1340, a data set including pixel correction values indicated by the indices mapped by the index mapper 1320.

The pixel correction value identifier 1340 identifies a pixel correction value based on the index mapped by the index mapper 1320 and the data set transmitted from the data set storage 1330.

The corrected pixel obtainer 1350 obtains an output image in which the current image has been corrected by using the pixel correction value identified by the pixel correction value identifier 1340 and a pixel value of the current decoding image.

According to an embodiment of the present disclosure, the scale factor generator 1360 may generate a scale factor. The corrected pixel obtainer 1350 may obtain the output image in which the current image has been corrected by using the pixel correction value identified by the pixel correction value identifier 1340, the pixel value of the current decoding image, and the scale factor.

According to an embodiment of the present disclosure, when a plurality of index mapping schemes are applied, the feature map obtainer 1310 may additionally obtain weight information from the neural network. The index mapper 1320 may map a plurality of indices for a plurality of respective pixels included in the current image by applying the plurality of index mapping schemes, based on the feature map. The data set storage 1330 may transmit, to the pixel correction value identifier 1340, a plurality of data sets including pixel correction values indicated by the plurality of indices mapped by the index mapper 1320. The pixel correction value identifier 1340 may identify the pixel correction value based on the plurality of indices mapped by the index mapper 1320 and the plurality of data sets transmitted from the data set storage 1330. The corrected pixel obtainer 1350 may obtain the output image in which the current image has been corrected by using the pixel correction value identified by the pixel correction value identifier 1340, the pixel value of the current decoding image, and the weight information. Also, the scale factor generator 1360 may generate the scale factor. The corrected pixel obtainer 1350 may obtain the output image in which the current image has been corrected by using the pixel correction value identified by the pixel correction value identifier 1340, the pixel value of the current decoding image, the weight information, and the scale factor.

FIG. 14 is a diagram for describing a method of training neural networks and a method of obtaining a data set, according to an embodiment of the present disclosure.

Referring to FIG. 14, a training current image 1400 corresponds to the current image described above, a training current decoding image 1401 corresponds to the current decoding image 301 described above, a training current prediction image 1402 corresponds to the current prediction image 302 described above, training coding context information 1403 for the training current image 1400 corresponds to the coding context information 303 for the current image described above, and a training output image 1430 corresponds to the output image 340 described above.

In a training process according to an embodiment of the present disclosure, neural networks may be trained so that the training output image 1430 becomes as similar as possible to the training current image 1400. Accordingly, as shown in FIG. 14, loss information 1440 may be used to train the neural networks.

When describing the training process of the neural networks in detail, the training current decoding image 1401, the training current prediction image 1402, and the training coding context information 1403 for the training current image 1400 are input to a first neural network 1405, and a feature map for the training current image 1400 is output. The first neural network 1405 is a neural network including at least one hidden layer.

Indices indicating a pixel correction value for one pixel from among a plurality of pixels included in the training current image 1400 may be obtained by performing index mapping 1410 by using the feature map. Pixel correction values are obtained by inputting the indices to a second neural network 1415. The second neural network 1415 is a deep neural network including a plurality of hidden layers. The index mapping 1410 used in the training process of the neural networks may be an approximate index mapping in which an index including any noise is obtained. The index mapping 1410 may include non-linear mapping such as clipping, stochastic quantization, or noisy quantization. A deep neural network including a plurality of layers is used to map an index to an actual residual pixel value. A receptive field of the deep neural network needs to have a size of 1x1. This is to satisfactorily reflect local characteristics.

The training output image 1430 is obtained by adding (1420) the obtained pixel correction values and the training current decoding image 1401. The loss information 1440 is obtained by comparing (1435) the training current image 1400 with the training output image 1430.

The loss information 1440 may correspond to a difference between the training current image 1400 and the training output image 1430. In an embodiment of the present disclosure, the difference between the training current image 1400 and the training output image 1430 may include at least one of an L1-norm value, an L2-norm value, a structural similarity (SSIM) value, a peak signal-to-noise ratio-human vision system (PSNR-HVS) value, a multiscale SSIM (MS-SSIM) value, a variance inflation factor (VIF) value, or a video multimethod assessment fusion (VMAF) value between the training current image 1400 and the training output image 1430.

Because the loss information 1440 is related to the quality of the training output image 1430, the loss information 1440 may be referred to as quality loss information.

The first neural network 1405 and the second neural network 1415 may be trained such that final loss information derived from the loss information 1440 is reduced or minimized.

In an embodiment of the present disclosure, the first neural network 1405 and the second neural network 1415 may reduce or minimize the final loss information while changing a value of a preset parameter.

In an embodiment of the present disclosure, the final loss information may be calculated according to Equation 1 below.

$Final Loss Information = a * Loss Information$

In Equation 1, a is a weight applied to the loss information 1440.

According to Equation 1, the first neural network 1405 and the second neural network 1415 are trained such that the training output image 1430 becomes as similar as possible to the training current image 1400.

The training process described with reference to FIG. 14 may be performed by a training apparatus. The training apparatus may be, for example, the image encoding apparatus 1300 or a separate server.

The trained second neural network 1415 is used to obtain a data set that is stored in a data set storage 1445. In detail, data sets are output by inputting all possible combinations of indices 1450 to the trained second neural network 1415. The output data sets are input to the data set storage 1445 and used.

The all possible combinations of indices 1450 are determined according to a quantized range of each index. For example, when the number of channels of a feature map output from a shallow neural network including one hidden layer is 4 ({c₁, c₂, c₃, c₄}) and c_{k|k=1, 2, 3, 4} ∈[-2, 2], [-2, -1, 0, 1, 2] may be mapped to [1, 2, 3, 4, 5]. When indices for a data set are four indices ({i₁, i₂, i₃, i₄}), i_{k|k=1, 2, 3, 4} ∈[1, 5], and thus, a value of the index may be one of five values from 1 to 5. An output value determined according to the value of the index may be a value corresponding to table[i₁][i₂][i₃][i₄]. Here, the size of a lookup table is 4x5.

Parameters for the first neural network 1405 obtained as a result of training may be stored in the image encoding apparatus 1300. The second neural network 1415 is used to obtain data sets stored in the data set storage 1445 and then the data set storage 1445 is used instead of the second neural network 1415, and thus, parameters for the second neural network 1415 are not required to be stored.

FIG. 15 is a diagram for describing a method of training neural networks and a method of obtaining data sets, according to an embodiment of the present disclosure.

Referring to FIG. 15, a training current image 1500 corresponds to the current image described above, a training current decoding image 1501 corresponds to the current decoding image 301 described above, a training current prediction image 1502 corresponds to the current prediction image 302 described above, training coding context information 1503 for the training current image 1500 corresponds to the coding context information 303 for the current image described above, and a training output image 1545 corresponds to the output image 340 described above.

In a training process according to an embodiment of the present disclosure, neural networks may be trained so that the training output image 1545 becomes as similar as possible to the training current image 1500. Accordingly, as shown in FIG. 15, loss information 1555 may be used to train the neural networks.

When describing the training process of the neural networks in detail, the training current decoding image 1501, the training current prediction image 1502, and the training coding context information 1503 for the training current image 1500 are input to a first neural network 1505, and a feature map and weight information 1513, 1514, and 1515 for the training current image 1500 are output. The first neural network 1505 is a neural network including at least one hidden layer.

The feature map may be three feature maps for respective three index mapping schemes 1510, 1511, and 1512. Alternatively, the feature map may be divided into three equal parts and applied to the three index mapping schemes 1510, 1511, and 1512, respectively.

The weight information 1513, 1514, and 1515 may be weight information corresponding to the respective index mapping schemes 1510, 1511, and 1512. In addition, the weight information 1513, 1514, and 1515 may be weight information corresponding to the feature maps divided and input to the index mapping schemes 1510, 1511, and 1512, respectively.

First indices indicating a pixel correction value for one pixel from among a plurality of pixels included in the training current image 1500 may be obtained by performing first index mapping 1510 by using the feature map. Second indices indicating a pixel correction value for one pixel from among a plurality of pixels included in the training current image 1500 may be obtained by performing second index mapping 1511 by using the feature map. Third indices indicating a pixel correction value for one pixel from among a plurality of pixels included in the training current image 1500 may be obtained by performing third index mapping 1512 by using the feature map.

The index mapping schemes 1510, 1511, and 1512 used in the training process of the neural networks may be approximate index mapping in which an index including random noise is obtained from the feature map. The index mapping schemes 1510, 1511, and 1512 may include non-linear mapping such as clipping, stochastic quantization, or noisy quantization.

First pixel correction values are obtained by inputting the first indices to a second neural network 1516, and weight-multiplied first pixel correction values are obtained by multiplying (1526) the first pixel correction values by first weight information 1513. Second pixel correction values are obtained by inputting the second indices to a third neural network 1517, and weight-multiplied second pixel correction values are obtained by multiplying (1527) the second pixel correction values by second weight information 1514. Third pixel correction values are obtained by inputting the third indices to a fourth neural network 1518, and weight-multiplied third pixel correction values are obtained by multiplying (1528) the third pixel correction values by third weight information 1515. Each of the second neural network 1516, the third neural network 1517, and the fourth neural network 1518 is a deep neural network including a plurality of hidden layers. Final pixel correction values are obtained by adding (1530) the weight-multiplied first pixel correction values, the weight-multiplied third pixel correction values, and the weight-multiplied third pixel correction values. The training output image 1545 is obtained by adding (1540) the final pixel correction values and sample values included in the training current decoding image 1501. The loss information 1555 is obtained by comparing (1550) the training current image 1500 with the training output image 1545.

The loss information 1555 may correspond to a difference between the training current image 1500 and the training output image 1545. In an embodiment of the present disclosure, the difference between the training current image 1500 and the training output image 1545 may include at least one of an L1-norm value, an L2-norm value, a SSIM value, a PSNR-HVS value, an MS-SSIM value, a VIF value, or a VMAF value between the training current image 1500 and the training output image 1545.

Because the loss information 1555 is related to the quality of the training output image 1545, the loss information 1555 may be referred to as quality loss information.

The first neural network 1505, the second neural network 1516, the third neural network 1517, and the fourth neural network 1518 may be trained such that final loss information derived from the loss information 1555 is reduced or minimized.

In an embodiment of the present disclosure, the first neural network 1505, the second neural network 1516, the third neural network 1517, and the fourth neural network 1518 may reduce or minimize the final loss information while changing a value of a preset parameter.

In an embodiment of the present disclosure, the final loss information may be calculated according to Equation 2 below.

$Final Loss Information = b * Loss Information$

In Equation 2, b is a weight applied to the loss information 1555.

According to Equation 2, the first neural network 1505, the second neural network 1516, the third neural network 1517, and the fourth neural network 1518 are trained such that the training output image 1545 becomes as similar as possible to the training current image 1500.

The training process described with reference to FIG. 15 may be performed by a training apparatus. The training apparatus may be, for example, the image encoding apparatus 1300 or a separate server.

The trained second neural network 1516 is used to obtain a first data set that is stored in a first data set storage 1565. In detail, the first data sets are output by inputting all possible combinations of table indices 1560 to the trained second neural network 1516. The output first data sets are input to the first data set storage 1565 and used.

The trained third neural network 1517 is used to obtain a second data set that is stored in a second data set storage 1575. In detail, the second data sets are output by inputting all possible combinations of table indices 1570 to the trained third neural network 1517. The output second data sets are input to the second data set storage 1575 and used.

The trained fourth neural network 1518 is used to obtain a third data set that is stored in a third data set storage 1585. In detail, the third data sets are output by inputting all possible combinations of table indices 1580 to the trained fourth neural network 1518. The output third data sets are input to the third data set storage 1585 and used.

Parameters for the first neural network 1505 obtained as a result of training may be stored in the image encoding apparatus 1300. The second neural network 1516 is used to obtain first data sets stored in the first data set storage 1565 and then the first data set storage 1565 is used instead of the second neural network 1516, and thus, parameters for the second neural network 1516 are not required to be stored. The third neural network 1517 and the fourth neural network 1518 are used to obtain the second data sets stored in the second data set storage 1575 and the third data sets stored in the third data set storage 1585, respectively, and then the second data set storage 1575 and the third data set storage 1585 are used instead of the third neural network 1517 and the fourth neural network 1518, and thus, parameters for the third neural network 1517 and the fourth neural network 1518 are not required to be stored.

An image decoding method according to an embodiment of the present disclosure may include obtaining a feature map for a plurality of pixels by inputting, to a neural network, a decoded image, a prediction image, and coding context information for a current image including the plurality of pixels, mapping an index indicating a pixel correction value for at least one pixel from among the plurality of pixels, based on the feature map, identifying the pixel correction value based on the index, obtaining a corrected pixel value for the at least one pixel based on the identified pixel correction value, and obtaining, from the current image, an output image in which the at least one pixel has been corrected to have the corrected pixel value.

In the image decoding method according to an embodiment of the present disclosure, computation and capacity of memory may be reduced by identifying the pixel correction value based on the index.

According to an embodiment of the present disclosure, the neural network may include at least one hidden layer.

In the image decoding method according to an embodiment of the present disclosure, the computation and the capacity of the memory may be reduced by using the neural network including one layer.

The image decoding method according to an embodiment of the present disclosure may further include obtaining a scale factor indicating a scale of pixel correction, wherein the corrected pixel value may be determined based on the identified pixel correction value and the scale factor.

In the image decoding method according to an embodiment of the present disclosure, a degree of application of the pixel correction value may be appropriately determined by using the scale factor.

According to an embodiment of the present disclosure, the index may indicate one of pixel correction values included in a pre-determined data set.

In the image decoding method according to an embodiment of the present disclosure, the computation and the capacity of the memory may be reduced by using the index indicating one of the pixel correction values included in the pre-determined data set.

According to an embodiment of the present disclosure, the index may indicate one of pixel correction values included in one data set from among a plurality of pre-determined data sets.

In the image decoding method according to an embodiment of the present disclosure, the computation and the capacity of the memory may be reduced by using the index indicating one of the pixel correction values included in one of the plurality of pre-determined data sets.

According to an embodiment of the present disclosure, the pre-determined data set or the plurality of pre-determined data sets may be stored in the form of a lookup table.

In the image decoding method according to an embodiment of the present disclosure, the computation and the capacity of the memory may be reduced by using the lookup table.

According to an embodiment of the present disclosure, the neural network may be trained by outputting a training feature map by using, as inputs, a training decoding image, a training prediction image, and training coding context information for a training current image, mapping a training index according to a pre-determined index mapping scheme by using the training feature map, obtaining a training pixel correction value by inputting the training index to a second neural network including a plurality of hidden layers, and obtaining a training output image based on the training pixel correction value.

In the image decoding method according to an embodiment of the present disclosure, as described above, the computation and the capacity of the memory may be reduced by using the trained neural network.

According to an embodiment of the present disclosure, at least one data set including the index may be obtained by inputting all possible indices to the second neural network.

In the image decoding method according to an embodiment of the present disclosure, the computation and the capacity of the memory may be reduced by using at least one data set obtained by inputting all possible indices to the second neural network.

An image decoding method according to an embodiment of the present disclosure may include obtaining a feature map for a plurality of pixels by inputting, to a neural network, a decoded image, a prediction image, and coding context information for a current image including the plurality of pixels, mapping an index indicating a pixel correction value for at least one pixel from among the plurality of pixels, based on the feature map, identifying the pixel correction value based on the index, obtaining a corrected pixel value for the at least one pixel based on the identified pixel correction value, and obtaining, from the current image, an output image in which the at least one pixel has been corrected to have the corrected pixel value.

In the image decoding method according to an embodiment of the present disclosure, by mixing a plurality of small data sets, the same coding efficiency as using a large data set may be achieved and capacity of memory may be reduced.

According to an embodiment of the present disclosure, a final pixel correction value may be obtained by using a weighted sum of the plurality of pixel correction values.

In the image decoding method according to an embodiment of the present disclosure, by using the weighted sum of the plurality of pixel correction values, the same coding efficiency as using a large data set may be achieved and the capacity of the memory may be reduced.

An image decoding apparatus according to an embodiment of the present disclosure may include memory storing one or more instructions, and at least one processor configured to operate according to the one or more instructions. The at least one processor may be configured to obtain a feature map for a plurality of pixels by inputting, to a neural network, a decoded image, a prediction image, and coding context information for a current image including the plurality of pixels. The at least one processor may be configured to map an index indicating a pixel correction value for at least one pixel from among the plurality of pixels, based on the feature map. The at least one processor may be configured to identify the pixel correction value based on the index. The at least one processor may be configured to obtain a corrected pixel value for the at least one pixel by using the identified pixel correction value. The at least one processor may be configured to obtain, from the current image, an output image in which the at least one pixel has been corrected to have the corrected pixel value.

The image decoding apparatus according to an embodiment of the present disclosure may identify the pixel correction value based on the index, and thus, computation and capacity of memory may be reduced.

According to an embodiment of the present disclosure, the neural network may include at least one hidden layer.

The image decoding apparatus according to an embodiment of the present disclosure may use the neural network including one layer, and thus, the computation and the capacity of the memory may be reduced.

The image decoding apparatus according to an embodiment of the present disclosure may obtain a scale factor indicating a scale of pixel correction, and determine the corrected pixel value based on the identified pixel correction value and the scale factor.

The image decoding apparatus according to an embodiment of the present disclosure may appropriately determine a degree of application of the pixel correction value by using the scale factor.

According to an embodiment of the present disclosure, the index may indicate one of pixel correction values included in a pre-determined data set.

The image decoding apparatus according to an embodiment of the present disclosure may use the index indicating one of the pixel correction values included in the pre-determined data set, and thus, the computation and the capacity of the memory may be reduced.

According to an embodiment of the present disclosure, the index may indicate one of pixel correction values included in one data set from among a plurality of pre-determined data sets.

The image decoding apparatus according to an embodiment of the present disclosure may use the index indicating one of the pixel correction values included in one of the plurality of pre-determined data sets, and thus, the computation and the capacity of the memory may be reduced.

According to an embodiment of the present disclosure, the pre-determined data set or the plurality of pre-determined data sets may be stored in the form of a lookup table.

The image decoding apparatus according to an embodiment of the present disclosure may use the lookup table, and thus, the computation and the capacity of the memory may be reduced.

According to an embodiment of the present disclosure, the neural network may be trained by outputting a training feature map by using, as inputs, a training decoding image, a training prediction image, and training coding context information for a training current image, mapping a training index according to a pre-determined index mapping scheme by using the training feature map, obtaining a training pixel correction value by inputting the training index to a second neural network including a plurality of hidden layers, and obtaining a training output image based on the training pixel correction value.

As described above, the image decoding apparatus according to an embodiment of the present disclosure may use the trained neural network, and thus, the computation and the capacity of the memory may be reduced.

According to an embodiment of the present disclosure, at least one data set including the index may be obtained by inputting all possible indices to the second neural network.

The image decoding apparatus according to an embodiment of the present disclosure may use at least one data set obtained by inputting all possible indices to the second neural network, and thus, the computation and the capacity of the memory may be reduced.

An image decoding apparatus according to an embodiment of the present disclosure may include memory storing one or more instructions, and at least one processor configured to operate according to the one or more instructions. The at least one processor may be configured to obtain a feature map for a plurality of pixels by inputting, to a neural network, a decoded image, a prediction image, and coding context information for a current image including the plurality of pixels. The at least one processor may be configured to map a plurality of indices indicating a pixel correction value for at least one pixel from among the plurality of pixels, based on the feature map. The at least one processor may be configured to identify a plurality of pixel correction values based on the plurality of indices. The at least one processor may be configured to obtain a final pixel correction value for the at least one pixel by using the plurality of identified pixel correction values. The at least one processor may be configured to obtain a corrected pixel value for the at least one pixel by using the obtained final pixel correction value. The at least one processor may be configured to obtain, from the current image, an output image in which the at least one pixel has been corrected to have the corrected pixel value.

In the image decoding apparatus according to an embodiment of the present disclosure, by mixing a plurality of small data sets, the same coding efficiency as using a large data set may be achieved and capacity of memory may be reduced.

According to an embodiment of the present disclosure, the final pixel correction value may be obtained by using a weighted sum of the plurality of pixel correction values.

In the image decoding apparatus according to an embodiment of the present disclosure, by using the weighted sum of the plurality of pixel correction values, the same coding efficiency as using a large data set may be achieved and the capacity of the memory may be reduced.

An image encoding method according to an embodiment of the present disclosure may include obtaining a feature map for a plurality of pixels by inputting, to a neural network, a decoded image, a prediction image, and coding context information for a current image including the plurality of pixels, mapping an index indicating a pixel correction value for at least one pixel from among the plurality of pixels, based on the feature map, identifying the pixel correction value based on the index, obtaining a corrected pixel value for the at least one pixel based on the identified pixel correction value, and obtaining, from the current image, an output image in which the at least one pixel has been corrected to have the corrected pixel value.

In the image encoding method according to an embodiment of the present disclosure, computation and capacity of memory may be reduced by identifying the pixel correction value based on the index.

According to an embodiment of the present disclosure, the neural network may include at least one hidden layer.

In the image encoding method according to an embodiment of the present disclosure, the computation and the capacity of the memory may be reduced by using the neural network including one layer.

The image encoding method according to an embodiment of the present disclosure may further include generating a scale factor indicating a scale of pixel correction, wherein the corrected pixel value may be determined based on the identified pixel correction value and the scale factor.

In the image encoding method according to an embodiment of the present disclosure, a degree of application of the pixel correction value may be appropriately determined by using the scale factor.

According to an embodiment of the present disclosure, the index may indicate one of pixel correction values included in a pre-determined data set.

In the image encoding method according to an embodiment of the present disclosure, the computation and the capacity of the memory may be reduced by using the index indicating one of the pixel correction values included in the pre-determined data set.

According to an embodiment of the present disclosure, the index may indicate one of pixel correction values included in one data set from among a plurality of pre-determined data sets.

In the image encoding method according to an embodiment of the present disclosure, the computation and the capacity of the memory may be reduced by using the index indicating one of the pixel correction values included in one of the plurality of pre-determined data sets.

According to an embodiment of the present disclosure, the pre-determined data set or the plurality of pre-determined data sets may be stored in the form of a lookup table.

In the image encoding method according to an embodiment of the present disclosure, the computation and the capacity of the memory may be reduced by using the lookup table.

According to an embodiment of the present disclosure, the neural network may be trained by outputting a training feature map by using, as inputs, a training encoding image, a training prediction image, and training coding context information for a training current image, mapping a training index according to a pre-determined index mapping scheme by using the training feature map, obtaining a training pixel correction value by inputting the training index to a second neural network including a plurality of hidden layers, and obtaining a training output image based on the training pixel correction value.

In the image encoding method according to an embodiment of the present disclosure, as described above, the computation and the capacity of the memory may be reduced by using the trained neural network.

According to an embodiment of the present disclosure, at least one data set including the index may be obtained by inputting all possible indices to the second neural network.

In the image encoding method according to an embodiment of the present disclosure, the computation and the capacity of the memory may be reduced by using at least one data set obtained by inputting all possible indices to the second neural network.

An image encoding method according to an embodiment of the present disclosure may include obtaining a feature map for a plurality of pixels by inputting, to a neural network, a decoded image, a prediction image, and coding context information for a current image including the plurality of pixels, mapping an index indicating a pixel correction value for at least one pixel from among the plurality of pixels, based on the feature map, identifying the pixel correction value based on the index, obtaining a corrected pixel value for the at least one pixel based on the identified pixel correction value, and obtaining, from the current image, an output image in which the at least one pixel has been corrected to have the corrected pixel value.

In the image encoding method according to an embodiment of the present disclosure, by mixing a plurality of small data sets, the same coding efficiency as using a large data set may be achieved and capacity of memory may be reduced.

According to an embodiment of the present disclosure, a final pixel correction value may be obtained by using a weighted sum of the plurality of pixel correction values.

In the image encoding method according to an embodiment of the present disclosure, by using the weighted sum of the plurality of pixel correction values, the same coding efficiency as using a large data set may be achieved and the capacity of the memory may be reduced.

An image encoding apparatus according to an embodiment of the present disclosure may include memory storing one or more instructions, and at least one processor configured to operate according to the one or more instructions. The at least one processor may be configured to obtain a feature map for a plurality of pixels by inputting, to a neural network, a decoded image, a prediction image, and coding context information for a current image including the plurality of pixels. The at least one processor may be configured to map an index indicating a pixel correction value for at least one pixel from among the plurality of pixels, based on the feature map. The at least one processor may be configured to identify the pixel correction value based on the index. The at least one processor may be configured to obtain a corrected pixel value for the at least one pixel by using the identified pixel correction value. The at least one processor may be configured to obtain, from the current image, an output image in which the at least one pixel has been corrected to have the corrected pixel value.

The image encoding apparatus according to an embodiment of the present disclosure may identify the pixel correction value based on the index, and thus, computation and capacity of memory may be reduced.

According to an embodiment of the present disclosure, the neural network may include at least one hidden layer.

The image encoding apparatus according to an embodiment of the present disclosure may use the neural network including one layer, and thus, the computation and the capacity of the memory may be reduced.

The image encoding apparatus according to an embodiment of the present disclosure may generate a scale factor indicating a scale of pixel correction, and determine the corrected pixel value based on the identified pixel correction value and the scale factor.

The image encoding apparatus according to an embodiment of the present disclosure may appropriately determine a degree of application of the pixel correction value by using the scale factor.

According to an embodiment of the present disclosure, the index may indicate one of pixel correction values included in a pre-determined data set.

The image encoding apparatus according to an embodiment of the present disclosure may use the index indicating one of the pixel correction values included in the pre-determined data set, and thus, the computation and the capacity of the memory may be reduced.

According to an embodiment of the present disclosure, the index may indicate one of pixel correction values included in one data set from among a plurality of pre-determined data sets.

The image encoding apparatus according to an embodiment of the present disclosure may use the index indicating one of the pixel correction values included in one of the plurality of pre-determined data sets, and thus, the computation and the capacity of the memory may be reduced.

According to an embodiment of the present disclosure, the pre-determined data set or the plurality of pre-determined data sets may be stored in the form of a lookup table.

The image encoding apparatus according to an embodiment of the present disclosure may use the lookup table, and thus, the computation and the capacity of the memory may be reduced.

According to an embodiment of the present disclosure, the neural network may be trained by outputting a training feature map by using, as inputs, a training encoding image, a training prediction image, and training coding context information for a training current image, mapping a training index according to a pre-determined index mapping scheme by using the training feature map, obtaining a training pixel correction value by inputting the training index to a second neural network including a plurality of hidden layers, and obtaining a training output image based on the training pixel correction value.

As described above, the image encoding apparatus according to an embodiment of the present disclosure may use the trained neural network, and thus, the computation and the capacity of the memory may be reduced.

According to an embodiment of the present disclosure, at least one data set including the index may be obtained by inputting all possible indices to the second neural network.

The image encoding apparatus according to an embodiment of the present disclosure may use at least one data set obtained by inputting all possible indices to the second neural network, and thus, the computation and the capacity of the memory may be reduced.

An image encoding apparatus according to an embodiment of the present disclosure may include memory storing one or more instructions, and at least one processor configured to operate according to the one or more instructions. The at least one processor may be configured to obtain a feature map for a plurality of pixels by inputting, to a neural network, a decoded image, a prediction image, and coding context information for a current image including the plurality of pixels. The at least one processor may be configured to map a plurality of indices indicating a pixel correction value for at least one pixel from among the plurality of pixels, based on the feature map. The at least one processor may be configured to identify a plurality of pixel correction values based on the plurality of indices. The at least one processor may be configured to obtain a final pixel correction value for the at least one pixel by using the plurality of identified pixel correction values. The at least one processor may be configured to obtain a corrected pixel value for the at least one pixel by using the obtained final pixel correction value. The at least one processor may be configured to obtain, from the current image, an output image in which the at least one pixel has been corrected to have the corrected pixel value.

In the image encoding apparatus according to an embodiment of the present disclosure, by mixing a plurality of small data sets, the same coding efficiency as using a large data set may be achieved and capacity of memory may be reduced.

According to an embodiment of the present disclosure, the final pixel correction value may be obtained by using a weighted sum of the plurality of pixel correction values.

In the image encoding apparatus according to an embodiment of the present disclosure, by using the weighted sum of the plurality of pixel correction values, the same coding efficiency as using a large data set may be achieved and the capacity of the memory may be reduced.

A machine-readable storage medium may be provided in the form of a non-transitory storage medium. Here, the term "non-transitory storage medium" only denotes a tangible device and does not contain a signal (e.g., electromagnetic waves), and this term does not distinguish between a case where data is semi-permanently stored in the storage medium and a case where data is temporarily stored in the storage medium. For example, the "non-transitory storage medium" may include a buffer in which data is temporarily stored.

According to an embodiment of the present disclosure, a method according to various embodiments of the present document may be included and provided in a computer program product. The computer program product may be traded between a seller and a buyer as a commodity. The computer program product may be distributed in the form of a machine-readable storage medium (e.g., compact disc read only memory (CD-ROM)), or may be distributed (e.g., downloaded or uploaded) through an application store or directly or online between two user devices (e.g., smartphones). In the case of online distribution, at least a portion of a computer program product (e.g., a downloadable application) may be at least temporarily generated or temporarily stored in a machine-readable storage medium such as a server of a manufacturer, a server of an application store, or memory of a relay server.

## Claims

1. An image decoding method comprising:
obtaining a feature map for a plurality of pixels by inputting, to a neural network, a decoded image, a prediction image, and coding context information for a current image including the plurality of pixels (S810);
mapping an index indicating a pixel correction value for at least one pixel from among the plurality of pixels, based on the feature map (S830);
identifying the pixel correction value based on the index (S850);
obtaining a corrected pixel value for the at least one pixel based on the identified pixel correction value (S870); and
obtaining, from the current image, an output image in which the at least one pixel has been corrected to have the corrected pixel value (S890).

2. The image decoding method of claim 1, wherein the neural network includes at least one hidden layer.

3. The image decoding method of claim 1 or 2, further comprising
obtaining a scale factor indicating a scale of pixel correction,
wherein the corrected pixel value is determined based on the identified pixel correction value and the scale factor.

4. The image decoding method of any one of claims 1 to 3, wherein the index indicates one of pixel correction values included in a pre-determined data set.

5. The image decoding method of any one of claims 1 to 3, wherein the index indicates one of pixel correction values included in one of a plurality of pre-determined data sets.

6. The image decoding method of claim 4 or 5, wherein the pre-determined data set or the plurality of pre-determined data sets are stored in a form of a lookup table.

7. The image decoding method of any one of claims 1 to 6, wherein
the neural network is trained by outputting a training feature map by using, as inputs, a training decoding image, a training prediction image, and training coding context information for a training current image,
mapping a training index according to a pre-determined index mapping scheme by using the training feature map,
inputting the training index to a second neural network including a plurality of hidden layers to obtain a training pixel correction value, and
obtaining a training output image based on the training pixel correction value.

8. The image decoding method of claim 7, wherein at least one data set including the index is obtained by inputting all possible indices to the second neural network.

9. An image decoding method comprising:
obtaining a feature map for a plurality of pixels by inputting, to a neural network, a decoded image, a prediction image, and coding context information for a current image including the plurality of pixels (S910);
mapping a plurality of indices indicating a pixel correction value for at least one pixel from among the plurality of pixels, based on the feature map (S930);
identifying a plurality of pixel correction values based on the plurality of indices (S930);
obtaining a final pixel correction value for the at least one pixel by using the plurality of identified pixel correction values (S940);
obtaining a corrected pixel value for the at least one pixel by using the obtained final pixel correction value (S950); and
obtaining, from the current image, an output image in which the at least one pixel has been corrected to have the corrected pixel value (S960).

10. The image decoding method of claim 9, wherein
the final pixel correction value is obtained by using a weighted sum of the plurality of pixel correction values.

11. An image encoding method comprising:
obtaining a feature map for a plurality of pixels by inputting, to a neural network, a decoded image, a prediction image, and coding context information for a current image including the plurality of pixels (S1110);
mapping an index indicating a pixel correction value for at least one pixel from among the plurality of pixels, based on the feature map (S1130);
identifying the pixel correction value based on the index (S1150);
obtaining a corrected pixel value for the at least one pixel based on the identified pixel correction value (S1170); and
obtaining, from the current image, an output image in which the at least one pixel has been corrected to have the corrected pixel value (S1190).

12. The image encoding method of claim 11, wherein the neural network includes at least one hidden layer.

13. The image encoding method of claim 11 or 12, further comprising
generating a scale factor indicating a scale of pixel correction,
wherein the corrected pixel value is determined based on the identified pixel correction value and the scale factor.

14. The image encoding method of any one of claims 11 to 13, wherein the index indicates one of pixel correction values included in a pre-determined data set.

15. The image encoding method of any one of claims 11 to 13, wherein the index indicates one of pixel correction values included in one of a plurality of pre-determined data sets.
